# EUROPEAN PATENT SPECIFICATION

(11) **EP 3 341 453 B1**
(45) Date of publication and mention of the grant of the patent: **17.07.2019**
(21) Application number: 16758257.6
(22) Date of filing: 26.08.2016
(51) Int. Cl.: C10G 3/00

(54) **HYDROCARBON PRODUCTION PROCESS**
VERFAHREN ZUR HERSTELLUNG VON KOHLENWASSERSTOFF
PROCÉDÉ DE PRODUCTION D'HYDROCARBURES

(30) Priority: 27.08.2015 GB 201515238
(43) Date of publication of application: 04.07.2018
(73) Proprietor: Oxford University Innovation Limited, Oxford, Oxfordshire OX2 0JB (GB); King Abdulaziz City for Science and Technology, Riyadh 11442 (SA)
(72) Inventor: XIAO, Tiancun, Oxford Oxfordshire OX1 3QR (GB); ZHANG, Zhaoxi, Oxford Oxfordshire OX1 3QR (GB); EDWARDS, Peter P., Oxford Oxfordshire OX1 3QR (GB); AL-MEGREN, Hamid, Riyadh 11442 (SA)
(74) Representative: J A Kemp
(86) International application number: PCT/GB2016/052665
(87) International publication number: WO 2017/033026

(56) References cited:
- US-A1- 2012 271 081
- US-A1- 2013 165 725

## Description

### FIELD OF THE INVENTION

The invention relates to a process for producing hydrocarbons from methanol.

### BACKGROUND TO THE INVENTION

Oil and natural gas together with coal, the main fossil fuels, not only remain our major energy sources but they are also the feedstocks for a great variety of manmade materials and products that range from gasoline and diesel oil to varied petrochemical and chemical products, including synthetic materials, plastics, and pharmaceuticals. However, our natural resources, formed over the course of eons, are being used up rapidly (significantly depleted) and will become increasingly costly (G. A. Olah, Angewandte Chemie International Edition 2005, 44, 2636-2639). Thus there is a need to search for new sources and solutions.

Methanol, which is presently prepared from fossil-fuel-based syn-gas and bio-mass, can also be prepared by direct oxidative conversion of natural gas (methane) or reductive conversion of atmospheric carbon dioxide with hydrogen. In this way, hydrogen can be stored by converting it into methanol - a convenient liquid fuel and raw material for synthetic hydrocarbons and their products - with carbon dioxide from industrial effluents or the atmosphere. This opens up the possibility of an alternative energy source to diminishing oil and gas resources and would lead to a feasible "methanol economy" (G. A. Olah, Angewandte Chemie International Edition 2005, 44, 2636-2639).

Although methanol itself is a potential motor fuel or can be blended with gasoline, it would require large investments to overcome the technical problems connected with the direct use of methanol as a motor fuel (M. Stöcker, Microporous and Mesoporous Materials 1999, 29, 3-48, http://dx.doi.org/10.1016/S1387-1811(98)00319-9). Therefore, methanol-to-hydrocarbons technology was developed, and this became one of the most investigated reactions in the field of industrial chemistry since it was discovered in 1977 (M. Conte, J. A. Lopez-Sanchez, Q. He, D. J. Morgan, Y. Ryabenkova, J. K. Bartley, A. F. Carley, S. H. Taylor, C. J. Kiely, K. Khalid, Catalysis Science & Technology 2012, 2, 105-112; A. Corma, Chemical reviews 1997, 97, 2373-2420).

During the methanol-to-hydrocarbon process methanol is converted into an equilibrium mixture of methanol, dimethyl ether and water, which can be processed catalytically to gasoline (methanol-to-gasoline, MTG), olefins (methanol-to-olefin, MTO) or aromatics (methanol-to-aromatics, MTA), depending on the catalyst and/or the process operation conditions (M. Stöcker, Microporous and Mesoporous Materials 1999, 29, 3-48, http://dx.doi.org/10.1016/S1387-1811(98)00319-9).

Zeolites are crystalline metallosilicates containing ordered micropores that enable shape-selective transformation (Y. Xin, P. Qi, X. Duan, H. Lin, Y. Yuan, Catalysis letters 2013, 143, 798-806). Given the high thermal stability and strong Brønsted acidity of zeolite catalysts, they are widely used in cracking, disproportionation, isomerization, alkylation, and aromatization (Y. Xin, P. Qi, X. Duan, H. Lin, Y. Yuan, Catalysis letters 2013, 143, 798-806; J. K. Reddy, K. Motokura, T.-r. Koyama, A. Miyaji, T. Baba, Journal of Catalysis 2012, 289, 53-61; Y.-J. Ji, B. Zhang, L. Xu, H. Wu, H. Peng, L. Chen, Y. Liu, P. Wu, Journal of Catalysis 2011, 283, 168-177; K. Toch, J. Thybaut, B. Vandegehuchte, C. Narasimhan, L. Domokos, G. Marin, Applied Catalysis A: General 2012, 425, 130-144; T. Odedairo, R. Balasamy, S. Al-Khattaf, Journal of Molecular Catalysis A: Chemical 2011, 345, 21-36; Y. H. Kim, K. H. Lee, J. S. Lee, Catalysis Today 2011, 178, 72-78).

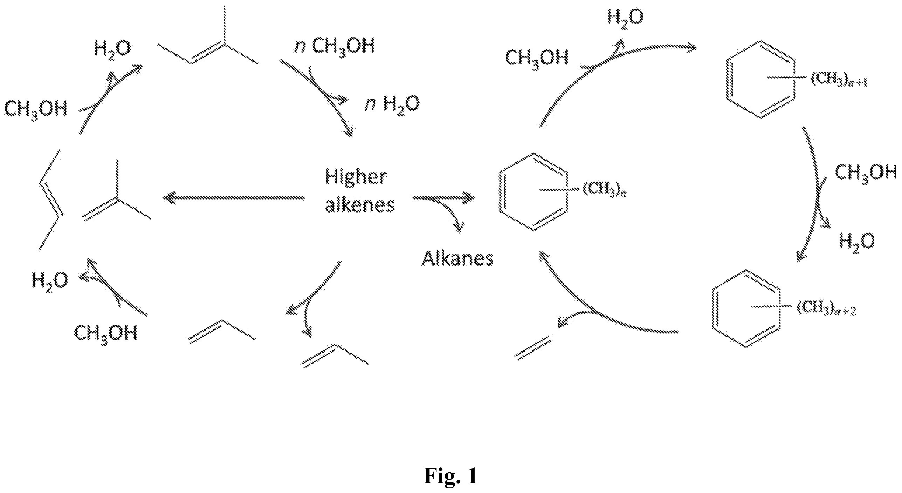

The conversion of methanol to hydrocarbons over acidic zeolites has been studied for decades, such as methanol to gasoline, methanol to olefins, and methanol to propene (Y. Xin, P. Qi, X. Duan, H. Lin, Y. Yuan, Catalysis letters 2013, 143, 798-806; J. Li, Y. Wei, J. Chen, P. Tian, X. Su, S. Xu, Y. Qi, Q. Wang, Y. Zhou, Y. He, Journal of the American Chemical Society 2011, 134, 836-839; N. Tajima, T. Tsuneda, F. Toyama, K. Hirao, Journal of the American Chemical Society 1998, 120, 8222-8229; M. Bjørgen, F. Joensen, K.-P. Lillerud, U. Olsbye, S. Svelle, Catalysis Today 2009, 142, 90-97; Y. Ni, A. Sun, X. Wu, G. Hai, J. Hu, T. Li, G. Li, Journal of Natural Gas Chemistry 2011, 20, 237-242). In recent years, the conversion of methanol-to-hydrocarbons over H-ZSM-5 is attracting increasing attention. The concept of the methanol-to-hydrocarbons conversion process over H-ZSM-5 is presented in Fig. 1.

Aromatics, especially benzene, toluene, and xylenes (BTX) are important chemical raw materials conventionally produced from feedstock of crude oil (Y. Xin, P. Qi, X. Duan, H. Lin, Y. Yuan, Catalysis letters 2013, 143, 798-806). However, controversy exists regarding the shortage of crude oil supply in the future (R. A. Kerr, Science 2005, 309, 101-101). With the continuous depletion of oil resources and continuous cost increases, new and more effcicient processes for BTX production are in high demand (Y. Xin et al., Catalysis letters 2013, 143, 798-806). Aromatics can be produced from CH₄, one of the important potential deep-processing energy sources with enormous reserves (J. H. Lunsford, Catalysis Today 2000, 63, 165-174). Catalysts like Mo₂C/ZSM-5 were reported to show good performances on the conversion of CH₄ to aromatics (L. Wang, L. Tao, M. Xie, G. Xu, J. Huang, Y. Xu, Catalysis Letters 1993, 21, 35-41; F. Solymosi, A. Szöke, J. Cserenyi, Catalysis letters 1996, 39, 157-161; C. Bouchy, I. Schmidt, J. Anderson, C. Jacobsen, E. Derouane, S. Derouane-Abd Hamid, Journal of Molecular Catalysis A: Chemical 2000, 163, 283-296; B. Cook, D. Mousko, W. Hoelderich, R. Zennaro, Applied Catalysis A: General 2009, 365, 34-41; M. V. Luzgin, V. A. Rogov, S. S. Arzumanov, A. V. Toktarev, A. G. Stepanov, V. N. Parmon, Catalysis Today 2009, 144, 265-272). Benzene can be produced as one of the main products with a selectivity of more than 80 % at a conversion of less than 15 % at the reaction temperature of 700°C. However, the low conversion and high reaction temperature of this process somewhat limits industrial application (Y. Xin, P. Qi, X. Duan, H. Lin, Y. Yuan, Catalysis letters 2013, 143, 798-806). By contrast, the conversion of methanol-to-aromatics (MTA) is usually performed at a lower temperature (Y. Ono, H. Adachi, Y. Senoda, Journal of the Chemical Society, Faraday Transactions 1: Physical Chemistry in Condensed Phases 1988, 84, 1091-1099). Aromatics, especially p-xylene the demand for which is high, can be produced by the MTA reaction as high value products. However, in certain studies the excess production of syngas-derived methanol was found to be a serious issue (see for instance Y. Xin, P. Qi, X. Duan, H. Lin, Y. Yuan, Catalysis letters 2013, 143, 798-806).

Co-feeding additional hydrocarbon reactant components together with methanol has been found to provide advantages in the methanol-to-hydrocarbons conversion. These advantages include (1) thermoneutral and low energy consumption, (2) the improvement of hydrocarbon cracking, (3) the reduction of coke disposition, (4) high yield and selectivity, and (5) simplification of reactor design (T. Gong, X. Zhang, T. Bai, Q. Zhang, L. Tao, M. Qi, C. Duan, L. Zhang, Industrial & Engineering Chemistry Research 2012, 51, 13589-13598; B. Lücke, A. Martin, H. Günschel, S. Nowak, Microporous and mesoporous materials 1999, 29, 145-157; D. Mier, A. T. Aguayo, A. G. Gayubo, M. Olazar, J. Bilbao, Applied Catalysis A: General 2010, 383, 202-210; D. Mier, A. T. Aguayo, A. G. Gayubo, M. Olazar, J. Bilbao, Chemical Engineering Journal 2010, 160, 760-769; Z. Wang, G. Jiang, Z. Zhao, X. Feng, A. Duan, J. Liu, C. Xu, J. Gao, Energy & Fuels 2009, 24, 758-763). Regarding the effect of co-feeding an olefin with methanol, the results of co-feeding propylene with methanol on ZSM-5 with isotopic labelling were reported in X. Wu, R. Anthony, Applied Catalysis A: General 2001, 218, 241-250, and it was concluded that propylene is reactive in the methanol-to-hydrocarbons conversion process, and that propene methylation is a non-negligible part of the reaction network. Möller et al., confirmed that co-feeding methanol and ethylene or propylene in the MTO process over H-ZSM-5 increased the yield of propylene and butenes, respectively (K. Möller, W. Böhringer, A. Schnitzler, E. Van Steen, C. O'Connor, Microporous and mesoporous materials 1999, 29, 127-144). On the other hand, Wu and Anthony observed that, over SAPO-34 during the conversion of methanol, the presence of propene in the feed increases the selectivities to ethene and butenes, which may be due to the competition for stronger acidic sites for the reactions of ethene with methanol and of propene with methanol. The presence of ethene in the feed was also found to increase the selectivities to propene and butenes (X. Wu, R. Anthony, Applied Catalysis A: General 2001, 218, 241-250). Regarding the effect of co-feeding a paraffin with methanol, Roohollai et al., observed that, propylene yield would be enhanced when i-butane fed to the reactor along with methanol (G. Roohollahi, M. Kazemeini, A. Mohammadrezaee, R. Golhosseini, Journal of Industrial and Engineering Chemistry 2013, 19, 915-919). The rising growth of the propylene yield continued to peak on till the balance in thermal condition established. Since methanol transformation was an exothermic reaction, co-feeding of i-butane with methanol might have compensated for the acid strengths and reduced temperature associated with the endothermic individual i-butane cracking reaction. Furthermore, when different methanol to i-butane ratios were fed with water in equal mass ratios of methanol to water, a considerable propylene enhancement was obtained. As for co-feeding an aromatic with methanol, Mole and Witeside observed that the rate of conversion of methanol to hydrocarbons over H-ZSM-5 zeolite is enhanced by the addition of aromatic hydrocarbons to the feed (T. Mole, J. A. Whiteside, D. Seddon, Journal of Catalysis 1983, 82, 261-266). They concluded that toluene promotes the catalytic activity of the catalyst for conversion of methanol to hydrocarbons. Various other aromatic hydrocarbons were likewise found to increase the activity: namely benzene, ethylbenzene, and p-xylene.

US 2013/165725 A1 discloses a process for preparing aromatics and olefins from an oxygenate feedstock.

It is generally known that organosulfur compounds, including for instance thiophenes and mercaptans, can cause catalyst deactivation. The acidity of a zeolite catalyst, for instance can be affected detrimentally by the chemisorption of basic compounds containing sulfur, nitrogen or oxygen (S. Bhatia, J. Beltramini, D. Do, Catalysis Reviews - Science and Engineering 1989, 31, 431-480). As an example of this, metal-ZSM-5 zeolites, for instance Pt-HZSM-5, Ni-HZSM-5 and Pt-NiHZSM-5, are reported to be used for the catalytic transformation of C₈ aromatics; in the isomerization of xylene over Ni-HZSM-5, but the presence of 2 ppm thiophene in the feed resulted in the loss of xylenes in the product stream (G. Babu, M. Santra, V. Shiralkar, P. Ratnasamy, Journal of Catalysis 1986, 100, 458-465). The contamination of a catalytic process feed by an organosulfur compound is therefore a serious issue. It is also a potential problem that has not yet been addressed in the field of catalytic methanol-to-hydrocarbon processing.

### SUMMARY OF THE INVENTION

Unwanted organosulfur compounds and olefins can be removed, by solvent extraction, from gasoline produced by fluid catalytic cracking (FCC gasoline) in order to produce ultra-clean FCC gasoline. Such an extraction process is described in International patent application no. PCT/GB2015/051465. If methanol is used as the extraction solvent in that process, the process produces a by-product stream which comprises both the methanol solvent and the various extracted components. The extracted components comprise organosulfur compounds, olefins and, in some cases, aromatics and paraffins too. Despite the presence of organosulfur compounds in this by-product stream, the inventors have surprisingly found that the methanol in the stream can be converted very efficiently, over a solid acid catalyst, into useful hydrocarbons, in a methanol-to-hydrocarbon process. In particular, the inventors have not only found that the olefins and, when present, the paraffin and aromatic components too, enhance the yields of the useful hydrocarbons produced, they have also found that the organosulfur component has no detrimental effect on the hydrocarbon yield. On the contrary, the inventors have observed a positive correlation between the concentration of the organosulfur component in the feed and the yield of useful liquid-phase hydrocarbons produced. This is an effect that would not have been expected in view of the known catalyst poisoning effects of organosulfur compounds. The invention therefore provides an advantageous methanol-to-hydrocarbon process in which the presence of olefin and organosulfur components in the methanol feed has a positive effect on the yield of useful hydrocarbons produced.

Accordingly, the invention provides a process for producing one or more hydrocarbons from methanol, which process comprises contacting a composition which comprises methanol, at least one alkene and at least one organosulfur compound, with a solid acid catalyst.

The composition which comprises methanol, at least one alkene and at least one organosulfur compound may be one which is obtainable by:
(a) contacting gasoline obtainable by a fluid catalytic cracking process, which gasoline comprises at least one alkene and at least one organosulfur compound, with an extraction solvent suitable for extracting alkenes and organosulfur compounds, which extraction solvent comprises said methanol, and thereby forming: (i) a first phase comprising said extraction solvent which comprises said methanol, at least one extracted alkene, and at least one extracted organosulfur compound, and (ii) a second phase comprising gasoline having a reduced alkene content and a reduced organosulfur content compared to said gasoline obtainable by a fluid catalytic cracking process; and
(b) recovering at least part of the first phase for use as the composition.

### BRIEF DESCRIPTION OF THE FIGURES

Fig. 1 is a reaction scheme showing the dual-cycle concept for the conversion of methanol over the acidic zeolite H-ZSM-5, as described in U. Olsbye,et al., Angewandte Chemie International Edition 2012, 51, 5810-5831.
Fig. 2 is a schematic illustration of the set up of the after-extraction conversion system and analysis equipment.
Fig. 3 is a plot of the total weight in grams of the oil phase produced (y axis) against the alkene (1-hexene) content in the methanol feed in units of weight % (x-axis).
Fig. 4 is a plot of the weights in grams of the particular aromatic hydrocarbons produced (y axis) against the alkene (1-hexene) content in the methanol feed in units of weight % (x-axis).
Fig. 5 presents plots of the output rates of various gaseous products (hydrogen, olefins, paraffins) in units of ml/min (y axis) versus time in units of minutes (x axis), for various different contents of alkene (1-hexene) in the methanol feed ranging from 0 to 20 % by weight.
Fig. 6 is a plot of the total weight in grams of the oil phase produced (y axis) against the paraffin (n-octane) content in the methanol feed in units of weight % (x-axis).
Fig. 7 is a plot of the weights in grams of the particular aromatic hydrocarbons produced (y axis) against the paraffin (n-octane) content in the methanol feed in units of weight % (x-axis).

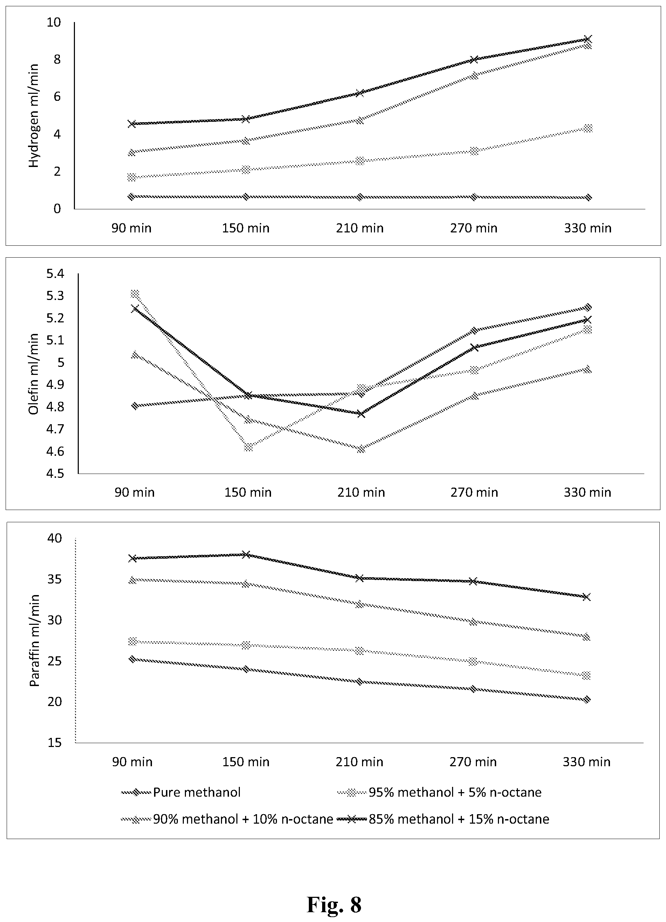

Fig. 8 presents plots of the output rates of various gaseous products (hydrogen, olefins, paraffins) in units of ml/min (y axis) versus time in units of minutes (x axis), for various different contents of paraffin (n-octane) in the methanol feed ranging from 0 to 15 % by weight.
Fig. 9 is a plot of the total weight in grams of the oil phase produced (y axis) against the aromatic (p-xylene) content in the methanol feed in units of weight % (x-axis).
Fig. 10 is a plot of the weights in grams of the particular aromatic hydrocarbons produced (y axis) against the aromatic (p-xylene) content in the methanol feed in units of weight % (x-axis).

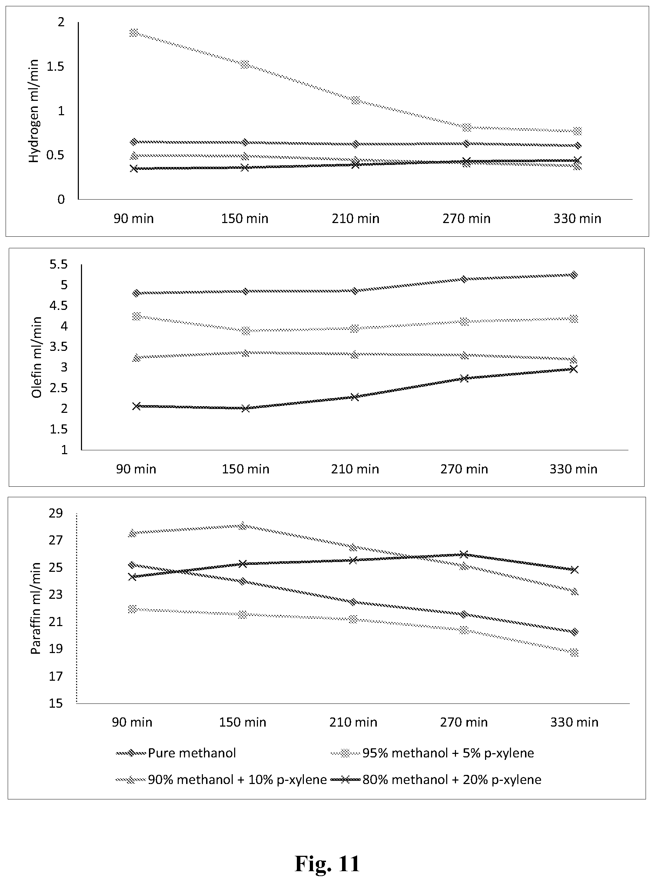

Fig. 11 presents plots of the output rates of various gaseous products (hydrogen, olefins, paraffins) in units of ml/min (y axis) versus time in units of minutes (x axis), for various different contents of aromatic (p-xylene) in the methanol feed ranging from 0 to 20 % by weight.
Fig. 12 is a plot of the total weight in grams of the oil phase produced (y axis) against the content of ethylene glycol in the methanol feed in units of weight % (x-axis).
Fig. 13 is a plot of the weights in grams of the particular aromatic hydrocarbons produced (y axis) against the content of ethylene glycol in the methanol feed in units of weight % (x-axis).

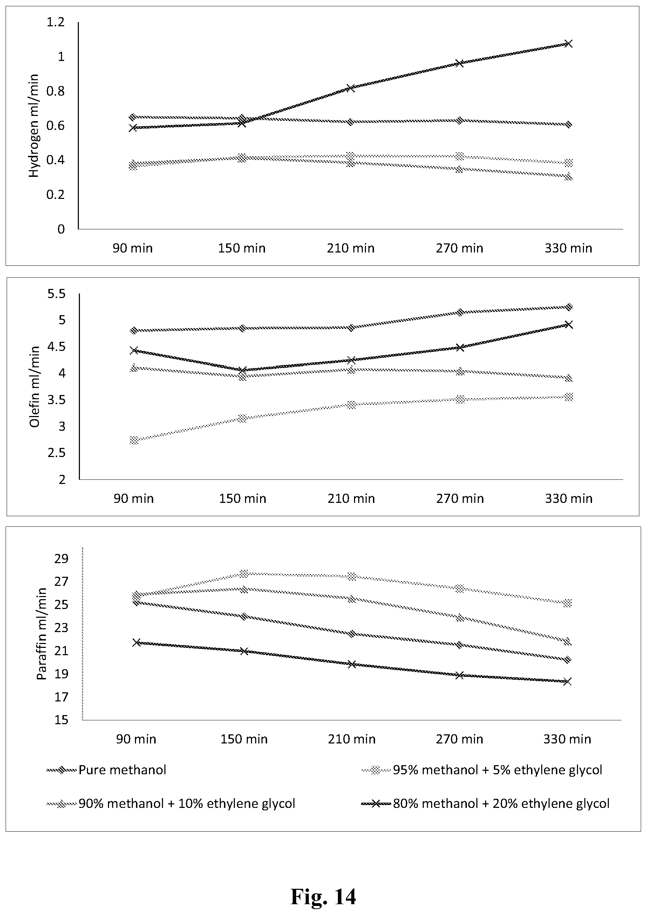

Fig. 14 presents plots of the output rates of various gaseous products (hydrogen, olefins, paraffins) in units of ml/min (y axis) versus time in units of minutes (x axis), for various different contents of ethylene glycol in the methanol feed ranging from 0 to 20 % by weight.
Fig. 15 is a plot of the total weight in grams of the oil phase produced (y axis) against the content of thiophene in the methanol feed in units of ppm by weight (x axis).
Fig. 16 is a plot of the weights in grams of the particular aromatic hydrocarbons produced (y axis) against the content of thiophene in the methanol feed in units of ppm by weight (x-axis).

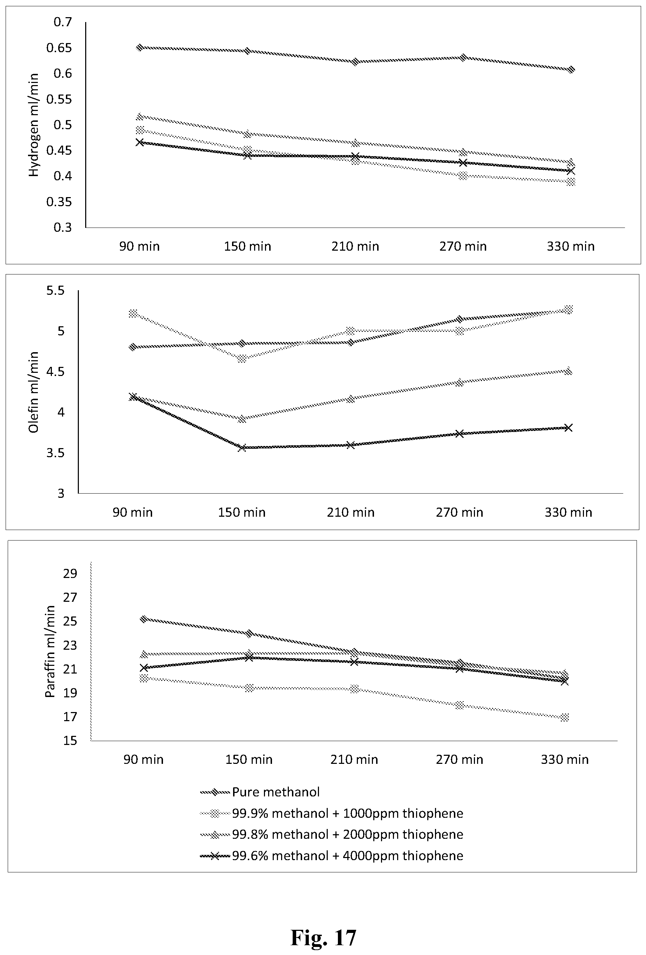

Fig. 17 presents plots of the output rates of various gaseous products (hydrogen, olefins, paraffins) in units of ml/min (y axis) versus time in units of minutes (x axis), for various different contents of thiophene in the methanol feed ranging from 0 to 4000 ppm by weight.
Fig. 18 is a plot of the total weight in grams of the oil phase produced (y axis) for the following reactant feeds and reaction temberatures (x axis): (i) 100% methanol and a temperature of 400 °C, (ii) a methanol and ethylene glycol (3:1 weight ratio) solvent extraction of model FCC gasoline mixture (MFGM), and a reaction temperature of 400 °C, and (iii) a methanol and ethylene glycol (3:1 weight ratio) solvent extraction of MFGM and a reaction temperature of 350 °C.
Fig. 19 is a plot of the weights in grams of the particular aromatic hydrocarbons produced (y axis) for the following reactant feeds and reaction temberatures (x axis): (i) 100% methanol and a temperature of 400 °C, (ii) a methanol and ethylene glycol (3:1 weight ratio) solvent extraction of model FCC gasoline mixture (MFGM), and a reaction temperature of 400 °C, and (iii) a methanol and ethylene glycol (3:1 weight ratio) solvent extraction of MFGM and a reaction temperature of 350 °C.
Fig. 20 presents plots of the output rates of various gaseous products (hydrogen, olefins, paraffins) in units of ml/min (y axis) versus time in units of minutes (x axis), for the following reactant feeds and reaction temberatures: (i) 100% methanol and a temperature of 400 °C, (ii) a methanol and ethylene glycol (3:1 weight ratio) solvent extraction of model FCC gasoline mixture (MFGM), and a reaction temperature of 400 °C, and (iii) a methanol and ethylene glycol (3:1 weight ratio) solvent extraction of MFGM and a reaction temperature of 350 °C.

### DETAILED DESCRIPTION OF THE INVENTION

The term "alkane", as used herein, refers to a linear or branched chain saturated hydrocarbon compound. An alkane may be a C₁₋₁₈ alkane, a C₂₋₁₈ alkane, a C₄₋₁₄ alkane, a C₄₋₁₂ alkane, or a C₆₋₁₀ alkane. Examples of a C₄₋₁₄ alkane are butane, pentane, hexane, heptane, octane, nonane, decane, undecane, dodecane, tridecane and tetradecane. Examples of a C₄₋₁₂ alkane are butane, isobutane, pentane, isopentane, hexane, methylpentane, dimethylbutane, heptane, methylhexane, dimethylpentane, octane, methylheptane, dimethylhexane, trimethylpentane, nonane, decane, undecane and dodecane. The terms "alkane" and "paraffin" may be used interchangeably. The term "n-alkane" (or "n-paraffin"), as used herein, refers to a straight chain alkane. The term "i-alkane" (or "i-paraffin"), as used herein, refers to a branched chain alkane. Alkanes such as dimethylbutane may be one or more of the possible isomers of this compound. Thus, dimethylbutane includes 2,3-dimethybutane and 2,2-dimethylbutane. This also applies for all organic compounds referred to herein including cycloalkane, alkene, cylcoalkene and alcohol compounds.

The term "cycloalkane", as used herein, refers to a saturated cyclic hydrocarbon compound. A cycloalkane may be a C₃₋₁₀ cycloalkane, a C₄₋₈ cycloalkane, or a C₅₋₈ cycloalkane. Examples of a C₄₋₈ cycloalkane include cyclobutane, cyclopentane, cyclohexane, methylcyclopentane, cycloheptane, methylcyclohexane, dimethylcyclopentane and cyclooctane. Examples of a C₅₋₈ cycloalkane include cyclopentane, cyclohexane, methylcyclopentane, cycloheptane, methylcyclohexane, dimethylcyclopentane and cyclooctane. The terms "cycloalkane" and "naphthene" may be used interchangeably.

The term "alkene", as used herein, refers to hydrocarbon compound comprising one or more double bonds. It is usually a linear or branched chain hydrocarbon compound comprising one or more double bonds. An alkene may be a C₂₋₁₈ alkene, a C₄₋₁₄ alkene, a C₄₋₁₂ alkene, or a C₄₋₁₀ alkene. Examples of a C₄₋₁₄ alkene are butene, pentene, hexene, heptene, octene, nonene, decene, undecene, dodecene, tridecene and tetradecene. Examples of a C₄₋₁₂ alkene are butene, pentene, methylbutene, hexene, methylpentene, dimethylbutene, heptene, methylhexene, dimethylpentene, octene, methylheptene, nonene, decene, undecene and dodecene. Alkenes typically comprise one or two double bonds. The terms "alkene" and "olefin" may be used interchangeably. The one or more double bonds may be at any position in the hydrocarbon chain. The alkenes may be cis- or trans-alkenes (or as defined using E- and Z- nomenclature). An alkene comprising a terminal double bond may be referred to as an "alk-1-ene" (e.g. hex-1-ene), a "terminal alkene" (or a "terminal olefin"), or an "alpha-alkene" (or an "alpha-olefin"). The term "alkene", as used herein also includes cycloalkenes unless otherwise specified.

The term "cylcoalkene", as used herein, refers to partially unsaturated cyclic hydrocarbon compound. A cycloalkene may be a C₄₋₁₀ cycloalkene, or a C₅₋₈ cycloalkene. Examples of a C₄₋₈ cycloalkene include cyclobutene, cyclopentene, cyclohexene, cyclohexa-1,3-diene, methylcyclopentene, cycloheptene, methylcyclohexene, dimethylcyclopentene and cyclooctene. A cycloalkene may comprise one or two double bonds.

The term "aromatic compound", "aromatic hydrocarbon" or "aromatic hydrocarbon compound", as used herein, refers to a hydrocarbon compound comprising one or more aromatic rings. The aromatic rings may be monocyclic or polycylic. Typically, an aromatic compound comprises a benzene ring. An aromatic compound is typically a C₆₋₁₄ aromatic compound, a C₆₋₁₂ aromatic compound or a C₆₋₁₀ aromatic compound. Examples of C₆₋₁₂ aromatic compounds are benzene, toluene, xylene, ethylbenzene, methylethylbenzene, trimethylbenzene, diethylbenzene, naphthalene, methylnaphthalene and ethylnaphthalene. The terms "aromatic compounds", "aromatics" and "arenes" may be used interchangeably.

The term "organosulfur compound", as used herein, refers to an organic compound comprising one or more sulfur atoms. An organosulfur compound may comprise only C, H and S atoms. A Cₙ₋ₘ organosulfur compound is an organosulfur compound that contains from n to m carbon atoms.

The term "alcohol", as used herein, refers to an organic compound which comprises one or more hydroxy (-OH) groups. Typically, an alcohol is an alkane (for instance a C₁₋₁₈ alkane, for example a C₁₋₁₄ alkane, a C₁₋₈ alkane, a C₁₋₆ alkane or a C₁₋₄ alkane) substituted with one or more hydroxy groups. Examples of alcohols include methanol, ethanol, isopropanol, propane-1,2-diol (propylene glycol) and sorbitol.

The term "monohydric alcohol" as used herein, takes its normal meaning in the art, i.e. an alcohol with a single -OH group. Examples of monohydric alcohols are methanol, ethanol, propanol, butanol and pentanol.

The term "dihydric alcohol", as used herein, takes its normal meaning in the art, i.e. an alcohol with two -OH groups. Examples of dihydric alcohols are ethane-1,2-diol (ethylene glycol) and propane-1,2-diol (propylene glycol).

The term "polyhydric alcohol", as used herein, takes its normal meaning in the art, i.e. an alcohol with two or more -OH groups. Examples of polyhydric alcohols are ethane-1,2-diol (ethylene glycol), propane-1,2-diol (propylene glycol) and sorbitol.

The term "alkyl", as used herein, refers to a linear or branched chain saturated hydrocarbon radical. An alkyl group may be a C₁₋₁₈ alkyl group, a C₁₋₁₄ alkyl group, a C₁₋₁₀ alkyl group, a C₁₋₆ alkyl group or a C₁₋₄ alkyl group. Examples of a C₁₋₁₀ alkyl group are methyl, ethyl, propyl, butyl, pentyl, hexyl, heptyl, octyl, nonyl or decyl. Examples of C₁₋₆ alkyl groups are methyl, ethyl, propyl, butyl, pentyl or hexyl. Examples of C₁₋₄ alkyl groups are methyl, ethyl, i-propyl, n-propyl, t-butyl, s-butyl or n-butyl. If the term "alkyl" is used without a prefix specifying the number of carbons anywhere herein, it has from 1 to 6 carbons.

The term "cycloalkyl", as used herein, refers to a saturated or partially unsaturated cyclic hydrocarbon radical. A cycloalkyl group may be a C₃₋₁₀ cycloalkyl group, a C₃₋₈ cycloalkyl group or a C₃₋₆ cycloalkyl group. Examples of a C₃₋₈ cycloalkyl group include cyclopropyl, cyclobutyl, cyclopentyl, cyclohexyl, cyclohexenyl, cyclohex-1,3-dienyl, cycloheptyl and cyclooctyl. Examples of a C₃₋₆ cycloalkyl group include cyclopropyl, cyclobutyl, cyclopentyl, and cyclohexyl.

The term "alkenyl", as used herein, refers to a linear or branched chain hydrocarbon radical comprising one or more double bonds. An alkenyl group may be a C₂₋₁₈ alkenyl group, a C₂₋₁₄ alkenyl group, a C₂₋₁₀ alkenyl group, a C₂₋₆ alkenyl group or a C₂₋₄ alkenyl group. Examples of a C₂₋₁₀ alkenyl group are ethenyl (vinyl), propenyl, butenyl, pentenyl, hexenyl, heptenyl, octenyl, nonenyl or decenyl. Examples of C₂₋₆ alkenyl groups are ethenyl, propenyl, butenyl, pentenyl or hexenyl. Examples of C₂₋₄ alkenyl groups are ethenyl, i-propenyl, n-propenyl, s-butenyl or n-butenyl. Alkenyl groups typically comprise one or two double bonds.

The term "alkynyl", as used herein, refers to a linear or branched chain hydrocarbon radical comprising one or more triple bonds. An alkynyl group may be a C₂₋₁₈ alkynyl group, a C₂₋₁₄ alkynyl group, a C₂₋₁₀ alkynyl group, a C₂₋₆ alkynyl group or a C₂₋₄ alkynyl group. Examples of a C₂₋₁₀ alkynyl group are ethynyl, propynyl, butynyl, pentynyl, hexynyl, heptynyl, octynyl, nonynyl or decynyl. Examples of C₁₋₆ alkynyl groups are ethynyl, propynyl, butynyl, pentynyl or hexynyl. Alkynyl groups typically comprise one or two triple bonds.

The term "aryl", as used herein, refers to a monocyclic, bicyclic or polycyclic aromatic ring which contains from 6 to 14 carbon atoms, typically from 6 to 10 carbon atoms, in the ring portion. Examples include phenyl, naphthyl, indenyl and indanyl groups. The term "aryl group", as used herein, includes heteroaryl groups. The term "heteroaryl", as used herein, refers to monocyclic or bicyclic heteroaromatic rings which typically contains from six to ten atoms in the ring portion including one or more heteroatoms. A heteroaryl group is generally a 5- or 6-membered ring, containing at least one heteroatom selected from O, S, N, P, Se and Si. It may contain, for example, one, two or three heteroatoms. Examples of heteroaryl groups include pyridyl, pyrazinyl, pyrimidinyl, pyridazinyl, furanyl, thienyl, pyrazolidinyl, pyrrolyl, oxazolyl, oxadiazolyl, isoxazolyl, thiadiazolyl, thiazolyl, isothiazolyl, imidazolyl, pyrazolyl, quinolyl and isoquinolyl.

The terms "alkylene", "cycloalkylene", "alkenylene", "alkynylene", and "arylene", as used herein, refer to bivalent groups obtained by removing a hydrogen atom from an alkyl, cycloalkyl, alkenyl, alkynyl, or aryl group, respectively. An alkylene group may be a C₁₋₁₈ alkylene group, a C₁₋₁₄ alkylene group, a C₁₋₁₀ alkylene group, a C₁₋₆ alkylene group or a C₁₋₄ alkylene group. Examples of C₁₋₆ alkylene groups are methylene, ethylene, propylene, butylene, pentylene and hexylene. A cycloalkylene group may be a C₃₋₁₀ cycloalkylene group, a C₃₋₈ cycloalkylene group or a C₃₋₆ cycloalkylene group. Examples of C₃₋₆ cycloalkylene groups include cyclopentylene and cyclohexylene. An alkenylene group may be a C₂₋₁₈ alkenylene group, a C₂₋₁₄ alkenylene group, a C₂₋₁₀ alkenylene group, a C₂₋₆ alkenylene group or a C₂₋₄ alkenylene group. Examples of a C₂₋₄ alkenylene group include ethenylene (vinylene), propenylene and butenylene. An alkynylene group may be a C₂₋₁₈ alkynylene group, a C₂₋₁₄ alkynylene group, a C₂₋₁₀ alkynylene group, a C₂₋₆ alkynylene group or a C₂₋₄ alkynylene group. Examples of a C₂₋₄ alkynylene group include ethynylene and propynylene. Examples of arylene groups include phenylene and a diradical derived from thiophene. For alkylene, cycloalkylene, alkenylene, alkynylene, and arylene, these groups may be bonded to other groups at any two positions on the group. Thus, propylene includes-CH₂CH₂CH₂- and -CH₂CH(CH₃)-, and phenylene includes ortho-, meta- and para-phenylene.

The term "substituted", as used herein in the context of substituted organic compounds, refers to an organic compound which bears one or more substituents selected from C₁₋₁₀ alkyl, aryl (as defined herein), cyano, amino, nitro, C₁₋₁₀ alkylamino, di(C₁₋₁₀)alkylamino, arylamino, diarylamino, aryl(C₁₋₁₀)alkylamino, amido, acylamido, hydroxy, oxo, halo, carboxy, ester, acyl, acyloxy, C₁₋₁₀ alkoxy, aryloxy, halo(C₁₋₁₀)alkyl, sulfonic acid, thiol, C₁₋₁₀ alkylthio, arylthio, sulfonyl, phosphoric acid, phosphate ester, phosphonic acid and phosphonate ester. Typically, the one or more substituents are selected from cyano, amino, nitro, amido, acylamido, hydroxy, oxo, halo, carboxy, ester, acyl, acyloxy, sulfonic acid, thiol, sulfonyl, phosphoric acid, phosphate ester, phosphonic acid and phosphonate ester When a compound is substituted, it may bear 1, 2, 3 or 4 substituents. For instance, a substituted compound may have 1, 2 or 3 substitutents, or for example 1 or 2 substitutents.

The process of the invention, which comprises contacting a composition which comprises methanol, at least one alkene and at least one organosulfur compound, with a solid acid catalyst, is a process for producing one or more hydrocarbons from the methanol. In other words, it is a methanol-to-hydrocarbons conversion process.

The one or more hydrocarbons produced may be selected from alkanes, cycloalkanes, alkenes (including cycloalkenes) and aromatic hydrocarbons. The alkanes, cycloalkanes, alkenes (including cycloalkenes) and aromatic hydrocarbons produced may be as further defined above in the definitions of these compounds.

The one or more hydrocarbons produced may for instance comprise (or may consist of) one or more aromatic compounds. Accordingly, the process may be a methanol-to-aromatics (MTA) process. Thus, the process of the invention may be a process for producing one or more aromatic hydrocarbons from said methanol.

The process of the invention may for instance be a process for producing one or more C₆₋₁₂ aromatic hydrocarbons from said methanol. The one or more C₆₋₁₂ aromatic hydrocarbons typically comprise a benzene ring. Often the one or more C₆₋₁₂ aromatic hydrocarbons include benzene substituted with one, two, three or four methyl groups. The one or more C₆₋₁₂ aromatic hydrocarbons typically include toluene, o-xylene, m-xylene, p-xylene, and 1,2,3-trimethylbenzene.

The one or more hydrocarbons produced generally comprise hydrocarbons which are in the liquid state at standard temperature and pressure, i.e. "liquid hydrocarbons".

The process of the invention may be a process for producing gasoline from said methanol. Accordingly, the process may be a methanol-to-gasoline (MTG) process.

The term "gasoline", as used herein, refers to a composition comprising hydrocarbons that may be used as fuel, for instance in an internal combustion engine. Typically, gasoline comprises alkanes, alkenes, cyloalkanes and aromatic compounds (also known as paraffinic, olefinic, naphthenic and aromatic hydrocarbons respectively). Gasoline typically comprises hydrocarbon compounds containing from 4 to 12 carbon atoms. Gasoline may comprise one or more C₄₋₁₂ alkane compounds, one or more C₄₋₁₂ alkene compounds, one or more C₄₋₁₀ cycloalkane compounds, or one or more C₆₋₁₂ aromatic hydrocarbon compounds. The components of gasoline typically have boiling points of less than or equal to 200°C. Typically, gasoline comprises hydrocarbons having a boiling point of from 30°C to 200°C. Gasoline is typically derived from a fraction of crude oil, either directly by fractional distillation to obtain a gasoline fraction or indirectly via the treatment of a heavier fraction obtained from crude oil (e.g. by fluid catalytic cracking). Gasoline may also however be produced by other methods, such as by the process of the invention, or simply by combining suitable hydrocarbon compounds into a gasoline mixture. Any reference to "boiling point" or "melting point" made herein is a reference to the boiling point or melting point at standard pressure, unless otherwise stated.

Thus, in one embodiment, the process of the invention is for producing gasoline from said methanol.

The process of the invention may be for producing longer chain hydrocarbons, for instance the one or more hydrocarbons which the process is for producing may comprise one or more C₆₋₁₈ alkanes, or for instance one or more C₆₋₁₈ alkenes. The one or more hydrocarbons produced may for example comprise one or more hydrocarbons selected from C₈₋₁₈ alkanes and C₈₋₁₈ alkenes, or for instance they may comprise one or more hydrocarbons selected from C₁₀₋₁₈ alkanes and C₁₀₋₁₈ alkenes.

In one embodiment, the process of the invention is for producing olefins, i.e. it is essentially a methanol-to-olefin (MTO) process. Thus, in this embodiment, the one or more hydrocarbons which the process is for producing comprise one or more olefins. The one or more olefins may be olefins as defined hereinbefore, e.g. one or more olefins selected from C₂₋₁₈ alkenes, or for instance, selected from C₄₋₁₄ alkenes, or from C₄₋₁₀ alkenes.

Usually, however, the process is an MTA process, and the one or more hydrocarbons comprise one or more aromatic compounds. As the skilled person will appreciate, when the process is an MTA process, one or more non-aromatic hydrocarbons (such as alkenes, alkanes and/or cycloalkanes, which may be as further defined above) may be produced in addition to the aromatic products, although non-aromatic hydrocarbons are not necessarily produced in addition to the aromatic ones.

In the process of the invention, the composition that is contacted with the solid acid catalyst comprises methanol, at least one alkene and at least one organosulfur compound.

The at least one alkene in the composition typically comprises one or more alkenes selected from C₂₋₁₈ alkenes and C₄₋₁₀ cycloalkenes. More typically, however, the at least one alkene comprises one or more alkenes selected from C₄₋₁₄ alkenes and C₄₋₁₀ cycloalkenes, for instance from C₄₋₁₂ alkenes and C₄₋₁₀ cycloalkenes. The at least one alkene may for instance comprise one or more alkenes selected from C₄₋₁₀ alkenes and C₄₋₁₀ cycloalkenes. The cycloalkenes may for instance be C₅₋₈ cycloalkenes. Thus, the at least one alkene in the composition may for instance comprise one or more alkenes selected from C₄₋₁₂ alkenes and C₅₋₈ cycloalkenes, or for instance one or more alkenes selected from C₄₋₁₀ alkenes and C₅₋₈ cycloalkenes.

The at least one alkene in the composition often however comprises one or more alkenes selected from C₂₋₁₈ alkenes. More typically, the at least one alkene comprises one or more alkenes selected from C₄₋₁₄ alkenes, for instance from C₄₋₁₂ alkenes. The at least one alkene may for example comprise one or more alkenes selected from C₄₋₁₀ alkenes.

Often, the at least one alkene in the composition includes a C₅₋₆ alkene or a C₅₋₆ cycloalkene.

The at least one alkene in the composition may for instance include a C₆ alkene or a C₆ cycloalkene.

The at least one alkene in the composition may for example include a C₅ alkene or a C₅ cycloalkene.

Usually, the at least one alkene in the composition includes a C₅₋₆ alkene.

Thus, the at least one alkene in the composition may include 1-pentene or 1-hexene. Often, it includes 1-hexene.

However, the at least one alkene in the composition may include 1-pentene.

Typically, the composition comprises the at least one alkene in an amount of at least 0.01 % by weight (wt %). The composition may for instance comprise the at least one alkene in an amount of at least 0.1 wt %, or, for instance, in an amount of at least 1.0 wt %, for instance an amount of at least 2.0 wt %, or for example an amount of at least 4.5 wt %. It may for instance comprise the at least one alkene in an amount of at least 5.0 wt %, or for instance in an amount of at least 7.0 wt %, or in an amount of at least 10.0 wt %. The composition optionally, for instance, comprises the at least one alkene in an amount of at least 11.0 wt %, or for instance in an amount of at least 13.0 wt %, or an amount of at least 15.0 wt %.

Typically, the composition comprises the at least one alkene in an amount of from 0.01 wt % to 30 wt %, for instance in an amount of from 0.01 wt % to 20 wt %.

The composition may for instance comprise the at least one alkene in an amount of from 0.1 wt % to 30 wt %, for instance in an amount of from 0.1 wt % to 20 wt %. Thus, for instance, the composition may comprise the at least one alkene in an amount of from 1.0 wt % to 30 wt %, for instance in an amount of from 1.0 wt % to 20 wt %. For example, the composition may comprise the at least one alkene in an amount of from 4.5 wt % to 30 wt %, for instance in an amount of from 5.0 wt % to 30 wt %, or for example in an amount of from 8.0 wt % to 30 wt %, for instance from 10.0 wt % to 25 wt %, or from 11.0 wt % to 20 wt %.

The at least one organosulfur compound in the composition typically comprises one or more organosulfur compounds selected from substituted or unsubstituted C₄₋₁₈ organosulfur compounds, more typically from substituted or unsubstituted C₄₋₁₂ organosulfur compounds.

The at least one organosulfur compound may comprise one or more organosulfur compounds comprising a thiophene ring, a benzothiophene ring or a dibenzothiophene ring.

For instance, the at least one organosulfur compound may comprise one or more compounds selected from substituted or unsubstituted thiophene, substituted or unsubstituted benzothiophene, and substituted or unsubstituted dibenzothiophene.

Typically, if the organosulfur compound is substituted, it is substituted with one or more, for instance from one to four, or for example, one, two or three, C₁₋₆ alkyl groups.

The at least one organosulfur compound typically includes at least one unsubstituted or substituted thiophene. When thiophene is substituted, it is typically substituted with one or more C₁₋₆ alkyl groups, for instance from one to four, or for example, one, two or three, C₁₋₆ alkyl groups.

The at least one organosulfur compound typically includes thiophene, i.e. unsubstituted thiophene.

In some embodiments, the at least one organosulfur compound is (i.e. it consists of) thiophene, i.e. unsubstituted thiophene, and no other organosulfur compounds are present in the composition. More typically, however, the at least one organosulfur compound in the composition comprises unsubstituted thiophene and at least one further organosulfur compound which is other than unsubstituted thiophene. The at least one further organosulfur compound may be one or more organosulfur compounds as further defined hereinbefore provided of course that those one or more organosulfur compounds are other than unsubstituted thiophene.

Typically, the composition comprises the at least one organosulfur compound in an amount of at least 10 ppm (i.e. 0.001 %) by weight. The composition may for instance comprise the at least one organosulfur compound in an amount of at least 50 ppm by weight, or, for instance, in an amount of at least 100 ppm by weight, for instance an amount of at least 200 ppm by weight, or for instance, an amount of at least 400 ppm by weight. It may for instance comprise the at least one organosulfur compound in an amount of at least 500 ppm by weight, or for instance in an amount of at least 700 ppm by weight, or in an amount of at least 900 ppm by weight. The composition optionally, for instance, comprises the at least one organosulfur compound in an amount of at least 1,000 ppm by weight, or for instance in an amount of at least 1,500 ppm by weight, or an amount of at least 3,000 ppm by weight.

Typically, the composition comprises the at least one organosulfur compound in an amount of from 10 ppm (i.e. 0.001 %) by weight to 50,000 ppm (i.e. 5 %) by weight, for instance in an amount of from 100 ppm (i.e. 0.01 %) to 10,000 ppm (i.e. 1 %) by weight, or for instance in an amount of from 200 ppm (i.e. 0.02%) to 5,000 ppm (i.e. 0.5%) by weight.

The composition may for instance comprise the at least one organosulfur compound in an amount of from 50 ppm to 50,000 ppm by weight, for instance in an amount of from 100 ppm to 50,000 ppm by weight. Thus, for instance, the composition may comprise the at least one organosulfur compound in an amount of from 200 ppm to 10,000 ppm by weight, for instance in an amount of from 400 ppm to 10,000 ppm by weight. For example, the composition may comprise the at least one organosulfur compound in an amount of from 500 ppm to 10,000 ppm by weight, for instance in an amount of from 700 ppm to 5,000 ppm by weight, or for example in an amount of from 1,000 ppm to 4,000 ppm by weight, for instance from 1,500 ppm to 5,000 ppm by weight, or from 3,000 ppm to 10,000 ppm by weight.

The composition that is contacted with the solid acid catalyst may, and typically does, further comprise at least one aromatic hydrocarbon compound.

The at least one aromatic hydrocarbon compound in the composition typically comprises one or more aromatic hydrocarbon compounds selected from C₆₋₁₄ aromatic compounds. More typically, however, the at least one aromatic hydrocarbon compound comprises one or more aromatic hydrocarbon compounds selected from C₆₋₁₂ aromatic compounds, for instance from C₆₋₁₀ aromatic compounds. The at least one aromatic hydrocarbon compound may for instance comprise one or more aromatic hydrocarbon compounds selected from benzene, toluene, xylene, ethylbenzene, methylethylbenzene, trimethylbenzene, diethylbenzene, naphthalene, methylnaphthalene and ethylnaphthalene, all of which are examples of C₆₋₁₂ aromatic compounds.

The at least one aromatic hydrocarbon compound in the composition may for instance include one or more aromatic hydrocarbons which are benzene substituted with one, two, three or four methyl or ethyl groups.

The at least one aromatic hydrocarbon compound in the composition may for example include one or more aromatic hydrocarbons which are benzene substituted with one, two, three or four methyl groups.

Usually, the at least one aromatic hydrocarbon compound in the composition includes one or more aromatic hydrocarbons selected from toluene, o-xylene, m-xylene, p-xylene, and 1,2,3-trimethylbenzene.

Thus, the at least one aromatic hydrocarbon compound in the composition may include at least two of toluene, o-xylene, m-xylene, p-xylene, and 1,2,3-trimethylbenzene. Often, the at least one aromatic hydrocarbon compound in the composition includes at least three of toluene, o-xylene, m-xylene, p-xylene, and 1,2,3-trimethylbenzene, for instance, four of the aforementioned five compounds, or even all five of them.

Often, the at least one aromatic hydrocarbon compound in the composition includes a C₅ aromatic hydrocarbon. Typically, the at least one aromatic hydrocarbon compound in the composition includes xylene. The at least one aromatic hydrocarbon compound in the composition may for instance include p-xylene.

Typically, the composition comprises the at least one aromatic hydrocarbon compound in an amount of at least 0.01 % by weight (wt %). The composition may for instance comprise the at least one aromatic hydrocarbon compound in an amount of at least 0.05 wt %, or, for instance, in an amount of at least 0.1 wt %, for instance an amount of at least 0.2 wt %, or for example an amount of at least 0.4 wt %. It may for instance comprise the at least one aromatic hydrocarbon compound in an amount of at least 0.5 wt %, or for instance in an amount of at least 1.0 wt %, or in an amount of at least 1.2 wt %. The composition optionally, for instance, comprises the at least one aromatic hydrocarbon compound in an amount of at least 5 wt %, or for instance in an amount of at least 8 wt %, or an amount of at least 15 wt %.

Typically, the composition comprises the at least one aromatic hydrocarbon compound in an amount of from 0.01 wt % to 30 wt %, for instance in an amount of from 0.01 wt % to 20 wt %.

The composition may for instance comprise the at least one aromatic hydrocarbon compound in an amount of from 0.05 wt % to 30 wt %, for instance in an amount of from 0.05 wt % to 25 wt %. Thus, for instance, the composition may comprise the at least one aromatic hydrocarbon compound in an amount of from 0.1 wt % to 20 wt %, for instance in an amount of from 0.2 wt % to 15 wt %. For example, the composition may comprise the at least one alkene in an amount of from 0.4 wt % to 10 wt %, for instance in an amount of from 0.5 wt % to 8 wt %, or for example in an amount of from 1.0 wt % to 5 wt %, for instance from 1.2 wt % to 10 wt %, or from 5 wt % to 20 wt % or from 8 wt % to 25 wt %.

The composition that is contacted with the solid acid catalyst may, and typically does, further comprise at least one alkane or cycloalkane. It often, for instance, further comprises at least one alkane or cycloalkane, and the at least one aromatic hydrocarbon compound defined above.

Said at least one alkane or cycloalkane may comprise: one or more alkanes and one or more cycloalkanes, one or more alkanes and no cycloalkanes, or no alkanes and one or more cycloalkanes. Often, it comprises either one or more alkanes and one or more cycloalkanes, or one or more alkanes and no cycloalkanes.

The one or more alkanes, when present, typically comprise one or more C₁₋₁₈ alkanes. More typically, the one or more alkanes, when present, comprise one or more C₄₋₁₈ alkanes. Thus, the one or more alkanes, when present, may comprise one or more C₄₋₁₄ alkanes, or more typically, for example, one or more C₄₋₁₂ alkanes, or for instance one or more C₆₋₁₀ alkanes. Often, the one or more alkanes, when present, include a C₈ alkane. Often, they include octane, for instance n-octane.

The one or more cycloalkanes, when present, typically comprise one or more C₃₋₁₀ cycloalkanes. More typically, the one or more cycloalkanes, when present, comprise one or more C₄₋₈ cycloalkanes. Thus, the one or more cycloalkanes, when present, may comprise one or more C₅₋₈ cycloalkanes.

Typically, the composition comprises the at least one alkane or cycloalkane in an amount of at least 0.01 % by weight (wt %). The composition may for instance comprise the at least one alkane or cycloalkane in an amount of at least 0.1 wt %, or, for instance, in an amount of at least 0.5 wt %, for instance an amount of at least 1.0 wt %, or for example an amount of at least 1.5 wt %. It may for instance comprise the at least one alkane or cycloalkane in an amount of at least 2.0 wt %, or for instance in an amount of at least 3.5 wt %, or in an amount of at least 4.0 wt %. The composition optionally, for instance, comprises the at least one alkane or cycloalkane in an amount of at least 5.0 wt %, or for instance in an amount of at least 7.0 wt %, or an amount of at least 12.0 wt %.

Typically, the composition comprises the at least one alkane or cycloalkane in an amount of from 0.01 wt % to 30 wt %, for instance in an amount of from 0.01 wt % to 20 wt %, or, for instance in an amount of from 0.01 wt % to 15 wt %. The composition may for instance comprise the at least one alkane or cycloalkane in an amount of from 0.01 wt % to 10 wt %, for instance from 0.01 wt % to 8 wt %.

The composition often for instance comprises the at least one alkane or cycloalkane in an amount of from 0.1 wt % to 30 wt %, for instance in an amount of from 0.1 wt % to 20 wt %. Thus, for instance, the composition may comprise the at least one alkane or cycloalkane in an amount of from 0.5 wt % to 30 wt %, for instance in an amount of from 1.0 wt % to 20 wt %. For example, the composition may comprise the at least one alkane or cycloalkane in an amount of from 1.5 wt % to 20 wt %, for instance in an amount of from 2.0 wt % to 20 wt %, or for example in an amount of from 3.5 wt % to 18 wt %, for instance from 4.0 wt % to 15 wt %, or from 5.0 wt % to 15 wt %.

Usually, the composition that is contacted with the solid acid catalyst further comprises at least one alkane. It often, for instance, further comprises at least one alkane and the at least one aromatic hydrocarbon compound defined above.

The at least one alkane may comprise one or more C₁₋₁₈ alkanes. More typically, however, the at least one alkane comprises one or more C₄₋₁₈ alkanes. Thus, the at least one alkane may comprise one or more C₄₋₁₄ alkanes, or, for example, one or more C₄₋₁₂ alkanes, or for instance one or more C₆₋₁₀ alkanes. Often, the at least one alkane includes a C₈ alkane. Often, the at least one alkane includes octane, for instance n-octane.

Typically, the composition comprises the at least one alkane in an amount of at least 0.01 % by weight (wt %). The composition may for instance comprise the at least one alkane in an amount of at least 0.1 wt %, or, for instance, in an amount of at least 0.5 wt %, for instance an amount of at least 1.0 wt %, or for example an amount of at least 1.5 wt %. It may for instance comprise the at least one alkane in an amount of at least 2.0 wt %, or for instance in an amount of at least 3.5 wt %, or in an amount of at least 4.0 wt %. The composition optionally, for instance, comprises the at least one alkane in an amount of at least 5.0 wt %, or for instance in an amount of at least 7.0 wt %, or an amount of at least 12.0 wt %.

Typically, the composition comprises the at least one alkane in an amount of from 0.01 wt % to 30 wt %, for instance in an amount of from 0.01 wt % to 20 wt %, or, for instance in an amount of from 0.01 wt % to 15 wt %. The composition may for instance comprise the at least one alkane in an amount of from 0.01 wt % to 10 wt %, for instance from 0.01 wt % to 8 wt %.

The composition often for instance comprises the at least one alkane in an amount of from 0.1 wt % to 30 wt %, for instance in an amount of from 0.1 wt % to 20 wt %. Thus, for instance, the composition may comprise the at least one alkane in an amount of from 0.5 wt % to 30 wt %, for instance in an amount of from 1.0 wt % to 20 wt %. For example, the composition may comprise the at least one alkane in an amount of from 1.5 wt % to 20 wt %, for instance in an amount of from 2.0 wt % to 20 wt %, or for example in an amount of from 3.5 wt % to 18 wt %, for instance from 4.0 wt % to 15 wt %, or from 5.0 wt % to 15 wt %.

The composition may therefore comprise the at least one alkene in an amount of from x¹ wt % to y¹ wt % (wherein x¹ < y¹), the at least one organosulfur compound in an amount of from x² wt % to y² wt % (wherein x² < y²), the at least one aromatic hydrocarbon compound in an amount of from x³ wt % to y³ wt % (wherein x³ < y³), the at least one alkane or cycloalkane in an amount of from x⁴ wt % to y⁴ wt % (wherein x⁴ < y⁴), and the methanol in an amount of at least [100-(y¹+y²+y³+y⁴)] wt %, wherein x¹, x², x³ and x⁴ and y¹, y², y³ and y⁴ may be as defined in any of the ranges given in the preceding paragraphs for the respective components.

For example, the composition may comprise the at least one alkene in an amount of from 0.01 wt % to 20 wt %, the at least one organosulfur compound in an amount of from 0.001 wt % to 1.0 wt %, the at least one aromatic hydrocarbon compound in an amount of from 0.01 wt % to 15 wt %, the at least one alkane or cycloalkane in an amount of from 0.01 wt % to 15 wt %, and the methanol in an amount of at least 49 wt %.

Often, the methanol makes up the balance of the composition. Thus, for example, when the composition comprises the at least one alkene, the at least one organosulfur compound, the at least one aromatic hydrocarbon, and the at least one alkane or cycloalkane, then, in some embodiments, the balance of the composition (i.e. the only other component present) is the methanol. In other embodiments, however, the composition comprises further components in addition.

The methanol in the composition is of course a polar organic solvent. The composition may further comprise one or more further polar organic solvents (i.e. in addition to the methanol). The one or more further polar organic solvents are of course other than methanol.

Methanol is a solvent which is suitable for extracting alkenes and organosulfur compounds from gasoline, such as FCC gasoline. The one or more further polar organic solvents are typically solvents which can be mixed with methanol to form a binary solvent system or a multinary solvent system (depending on how may different further polar organic solvents are employed) which is itself suitable for extracting alkenes and organosulfur compounds from gasoline, such as FCC gasoline.

The one or more further polar organic solvents may comprise one or more compounds selected from: alcohols other than methanol, aldehydes, ketones, ethers, carboxylic acids, esters, carbonates, acid anhydrides, amides, amines, heterocyclic compounds, imines, imides, nitriles, nitro compounds, sulfoxides, and haloalkanes. The one or more further polar organic solvents are preferably one or more compounds selected from alcohols other than methanol, ketones, ethers, esters, amines, heterocyclic compounds, nitriles, sulfoxides and haloalkanes. Often, the one or more further polar organic solvents comprise one or more compounds selected from alcohols other than methanol, ketones, ethers, esters, and nitriles.

The alcohols other than methanol may comprise any C₁₋₁₀ alcohol other than methanol, and preferably comprise any C₁₋₄ alcohol other than methanol. An alcohol may have the structure alkyl-OH, HO-alkylene-OH, alkenyl-OH, OH-alkenylene-OH, cycloalkyl-OH, or OH-cycloalkylene-OH. The alcohol other than methanol may be an alcohol of formula ROH or HOR'OH, wherein R is a group selected from unsubstituted or substituted C₂₋₁₀ alkyl, unsubstituted or substituted C₃₋₁₀ alkenyl, unsubstituted or substituted C₃₋₁₀ alkynyl, unsubstituted or substituted C₄₋₁₀ cycloalkyl, and unsubstituted or substituted C₆₋₁₀ aryl, and R' is a group selected from unsubstituted or substituted C₂₋₁₀ alkylene, unsubstituted or substituted C₂₋₁₀ alkenylene, unsubstituted or substitutued C₂₋₁₀ alkynylene, unsubstituted or substituted C₅₋₁₀ cycloalkylene, and unsubstituted or substituted C₆₋₁₀ arylene. Typically, R and R' are unsubstituted.

Examples of alcohols other than methanol which the one or more further polar organic solvents may comprise include: monohydric alcohols such as ethanol, propanol, isopropanol (propan-2-ol), butanol (butan-1-ol), secbutanol (butan-2-ol), isobutanol (2-methylpropan-1-ol), tertbutanol (2-methylpropan-2-ol), cyclopentanol, pentanol, cyclohexanol, hexanol, heptanol and octanol; and polyhydric alcohols such as ethane-1,2-diol (ethylene glycol), propane-1,2-diol (propylene glycol), propane-1,3-diol, propane-1,2,3-triol (glycerol), isopropanediol, butanediol, isobutanediol, tertbutanediol, butanetriol, pentanediol, methylbutanediol, hexanediol, hexanetriol. For compounds wherein the positions of hydroxy groups are not specified, alcohols having each of the positions are covered. Thus, butanediol includes butane-1,2-diol, butane-1,3-diol, butane-1,4-diol and butane-2,3-diol. Ethane-1,2-diol (ethylene glycol), propane-1,2-diol (propylene glycol), propane-1,3-diol, isopropanediol, and butanediol are examples of dihydric alcohols. In particular, the alcohol other than methanol may be selected from ethanol, propanol, isopropanol, butanol, secbutanol, isobutanol, ethylene glycol, propylene glycol, and propane-1,3-diol. For instance, the alcohol other than methanol may be selected from ethanol, propanol, isopropanol, ethylene glycol and propylene glycol.

The aldehydes may comprise any C₁₋₁₀ aldehyde, for instance any C₃₋₆ aldehyde. An aldehyde typically has the structure alkyl-CHO. Examples of suitable aldehyde solvents include methanal (formaldehyde), ethanal (acetaldehyde), propanal, butanal, pentanal and hexanal.

The ethers may be any C₂₋₁₀ ether, i.e. any ether containing from 2 to 10 carbon atoms. An ether typically has the structure alkyl-O-alkyl or that of an alicyclic ether. The ether may be linear, branched or cyclic. Examples of suitable ether solvents include diethyl ether, ethyl isopropyl ether, dipropyl ether, diisopropyl ether and tetrahydrofuran.

The carboxylic acids may be any C₁₋₈ carboxylic acid. A carboxylic acid typically has the structure alkyl-COOH. The carboxylic acids may be linear, branched or cyclic. Examples of suitable carboxylic acid solvents include methanoic acid (formic acid), ethanoic acid (acetic acid), propanoic acid, butanoic acid and pentanoic acid.

The esters may be any C₂₋₁₀ ester. For instance, the esters may be C₁₋₅ alkyl C₁₋₅ carboxylates. An ester typically has the structure alkyl-COO-alkyl. Examples of suitable ester solvents include methyl formate, ethyl formate, methyl acetate, ethyl acetate, vinyl acetate, propyl acetate, isopropyl acetate, butyl acetate, isobutyl acetate, tertbutyl acetate, pentyl acetate, methyl propanoate, ethyl propanoate, propyl propanoate, and ethyl isopropanoate.

The carbonates may comprise any C₃₋₁₀ carbonate. A carbonate typically has the structure alkyl-OC(O)O-alkyl. Examples of suitable carbonate solvents include dimethylcarbonate, ethylmethylcarbonate and diethyl carbonate. The carbonates may include propylene carbonate or trimethylene carbonate.

The acid anhydrides may comprise any C₄₋₈ acid anhydride. An example of a suitable acid anhydride solvent is acetic anhydride.

The amides may comprise may be any C₂₋₁₀ amide. An amide typically has the structure alkyl-CONH₂, alkyl-CONH(alkyl) or alkyl-CON(alkyl)₂. Examples of suitable amide solvents include formamide, N-methyl formamide, dimethyl formamide, dimethyl acetamide, N-vinylacetamide, pyrrolidone, N-methyl pyrrolidone, and N-vinyl pyrrolidone.

The amines may for instance be any C₂₋₁₅ amines. An amine typically has the structure RNH₂, R₂NH, R₃N, and H₂NRNH₂ where R may be selected from C₂₋₁₀ alkyl, C₂₋₁₀ alkenyl, C₂₋₁₂ alkynyl, C₆₋₁₀ aryl, and C₆₋₁₂ arylalkyl, and R' may be selected from C₂₋₁₀ alkylene, C₂₋₁₀ alkenylene, C₂₋₁₀ alkynylene, C₅₋₁₀ cycloalkylene, and C₆₋₁₀ arylene. The amines may be a primary, secondary or tertiary amines. The amines may comprise one or more, or two or more amine groups. The amines may be selected from mono-C₂₋₁₅-alkylamines, di-C₁₋₇- alkylamines and tri-C₁₋₅-alkylamines. The amines may be a C₂₋₁₀-alkylenediamine. Examples of suitable amines solvents include ethylamine, triethylamine, tripropylamine, tributylamine, ethylenediamine, propylenediamine, diethylenetriamine, morpholine, piperidine, and quinoline.

The heterocyclic compounds may for instance be any C₃₋₁₀ heterocyclic compound. The heterocyclic compounds may be any compounds having from 3 to 10 carbon atoms and comprising a ring, which ring comprises a heteroatom selected from N, P, O and S. The further polar solvent(s) may comprise a heterocyclic compounds selected from furan, tetrahydrofuran, thiophene, pyrrole, pyrroline, pyrrolidine, dioxolane, oxazole, thiazole, imidazole, imidazoline, imidazolidine, pyrazole, pyrazoline, pyrazolidine, izoxazole, isothiazole, oxadiazole, pyran, pyridine, piperidine, pyridazine, and piperazine. For instance, the further polar solvent or solvents may include pyridine, furan or tetrahydrofuran.

The imines may for instance be selected from C₄₋₁₀ imines. The imides may be selected from C₄₋₁₀ imides. The nitriles may for instance be C₂₋₁₀ nitriles. For instance, suitable nitrile solvents include acetonitrile and propionitrile.

The nitro compounds may be C₁₋₁₀ nitro compound. For instance, suitable nitro solvents include nitromethane, nitroethane, nitropropane and nitrobenzene.

The sulfoxide compounds may for instance be any C₂₋₁₀ sulfoxide compounds. For instance, suitable sulfoxide solvent include dimethylsulfoxide (DMSO). The further polar solvent or solvents may for instance comprise diethylsulfoxide or methylethylsulfoxide.

The haloalkanes may for instance be any C₁₋₁₀ haloalkane solvents. For instance, suitable haloalkane solvents include dichloromethane (DCM), trichloromethane, tetrachloromethane and dichloroethane.

Any of the further polar organic solvent compounds listed above (i.e. any alcohol, aldehyde, ketone, ether, carboxylic acid, ester, carbonate, acid anhydride, amide, amine, heterocyclic compound, imine, imide, nitrile, nitro compound, sulfoxide, or haloalkane) may be substituted or unsubstituted. Typically, the solvent compounds are unsubstituted.

Thus, the one or more further polar organic solvents may comprise one or more compounds selected from ethanol, propanol, isopropanol, butanol, secbutanol, isobutanol, ethylene glycol, propylene glycol, propane-1,3-diol, propanone (acetone), butanone, pentan-2-one, pentan-3-one, diethyl ether, ethyl isopropyl ether, dipropyl ether, diisopropyl ether, tetrahydrofuran, ethanoic acid (acetic acid), propanoic acid, ethyl acetate, vinyl acetate, dimethylcarbonate, pyrrolidone, N-methyl pyrrolidone, N-vinyl pyrrolidone, ethylamine, triethylamine, tripropylamine, tributylamine, ethylenediamine, propylenediamine, diethylenetriamine, morpholine, piperidine, quinoline, pyridine, furan, tetrahydrofuran, acetonitrile, propionitrile, nitromethane, nitroethane, nitropropane, nitrobenzene, dimethylsulfoxide (DMSO), dichloromethane (DCM), trichloromethane, tetrachloromethane and dichloroethane. For instance, the one or more further polar organic solvents may comprise a compound selected from ethanol, propanol, isopropanol, ethylene glycol, propylene glycol, propane-1,3-diol, propanone (acetone), diethyl ether, ethyl isopropyl ether, dipropyl ether, diisopropyl ether, tetrahydrofuran, ethanoic acid (acetic acid), pyrrolidone, ethylenediamine, propylenediamine, diethylenetriamine, pyridine, furan, tetrahydrofuran, acetonitrile, dimethylsulfoxide (DMSO), and dichloromethane (DCM).

The one or more further polar organic solvents may therefore comprise one or more compounds selected from ethanol, propanol, isopropanol, butanol, secbutanol, isobutanol, ethylene glycol, propylene glycol, propane-1,3-diol, propanone (acetone), butanone, pentan-2-one, pentan-3-one, diethyl ether, ethyl isopropyl ether, dipropyl ether, diisopropyl ether, tetrahydrofuran, ethanoic acid (acetic acid), propanoic acid, ethyl acetate, vinyl acetate, dimethylcarbonate, pyrrolidone, N-methyl pyrrolidone, N-vinyl pyrrolidone, ethylamine, triethylamine, tripropylamine, tributylamine, ethylenediamine, propylenediamine, diethylenetriamine, morpholine, piperidine, quinoline, pyridine, furan, tetrahydrofuran, acetonitrile, propionitrile, nitromethane, nitroethane, nitropropane, nitrobenzene, dimethylsulfoxide (DMSO), dichloromethane (DCM), trichloromethane, tetrachloromethane and dichloroethane. For instance, the one or more further polar organic solvents may comprise one or more compounds selected from ethanol, propanol, isopropanol, ethylene glycol, propylene glycol, propane-1,3-diol, propanone (acetone), diethyl ether, ethyl isopropyl ether, dipropyl ether, diisopropyl ether, tetrahydrofuran, ethanoic acid (acetic acid), pyrrolidone, ethylenediamine, propylenediamine, diethylenetriamine, pyridine, furan, tetrahydrofuran, acetonitrile, dimethylsulfoxide (DMSO), and dichloromethane (DCM).

The one or more further polar organic solvents often comprise one or more polar protic organic solvents other than methanol. Thus, the one or more further polar organic solvents may comprise any of the polar protic organic solvents listed above other than methanol. The one or more further polar organic solvents may for instance be selected from alcohols other than methanol, carboxylic acids, primary amines and secondary amines. For instance, the one or more further polar organic solvents may selected from ethanol, propanol, isopropanol, butanol, secbutanol, isobutanol, tertbutanol, cyclopentanol, pentanol, cyclohexanol, hexanol, heptanol, octanol, ethane-1,2-diol (ethylene glycol), propane-1,2-diol (propylene glycol), propane-1,3-diol, propane-1,2,3-triol (glycerol), isopropanediol, butanediol, isobutanediol, tertbutanediol, butanetriol, pentanediol, methylbutanediol, hexanediol, hexanetriol, methanoic acid (formic acid), ethanoic acid (acetic acid), propanoic acid, butanoic acid, pentanoic acid, ethylamine, ethylenediamine, propylenediamine, diethylenetriamine, morpholine, and piperidine.

Usually, at least one of the one or more further polar organic solvents is a polyhydric alcohol. Thus, at least one of the one or more further polar organic solvents is typically selected from a polyhydric alcohol comprising two, three or four hydroxy groups. For instance, the it may be selected from ethane-1,2-diol (ethylene glycol), propane-1,2-diol (propylene glycol), propane-1,3-diol, propane-1,2,3-triol (glycerol), isopropanediol, butanediol, isobutanediol, tertbutanediol, butanetriol, pentanediol, methylbutanediol, hexanediol, and hexanetriol.

Often, for instance, at least one of the one or more further polar organic solvents is a dihydric alcohol. The one or more further polar organic solvents may therefore comprise one or more of ethane-1,2-diol (ethylene glycol), propane-1,2-diol (propylene glycol), propane-1,3-diol, isopropanediol, butanediol, isobutanediol, tertbutanediol, pentanediol, methylbutanediol, and hexanediol. For instance, the one or more further polar organic solvents may comprise one or more of ethane-1,2-diol (ethylene glycol), propane-1,2-diol (propylene glycol), and propane-1,3-diol.

Preferably, at least one of the one or more further polar organic solvents is ethylene glycol or propylene glycol. More preferably at least one of the one or more further polar organic solvents is ethylene glycol.

Typically, the composition comprises the one or more other polar organic solvents in an amount of at least 0.01 % by weight (wt %). The composition may for instance comprise the one or more other polar organic solvents in an amount of at least 0.1 wt %, or, for instance, in an amount of at least 1.0 wt %, for instance an amount of at least 2.0 wt %, or for example an amount of at least 4.5 wt %. It may for instance comprise the one or more other polar organic solvents in an amount of at least 5.0 wt %, or for instance in an amount of at least 7.0 wt %, or in an amount of at least 10.0 wt %. The composition optionally, for instance, comprises the one or more other polar organic solvents in an amount of at least 15.0 wt %, or for instance in an amount of at least 17.0 wt %, or an amount of at least 20.0 wt %.

Typically, the composition comprises the one or more other polar organic solvents in an amount of from 0.01 wt % to 30 wt %, for instance in an amount of from 0.01 wt % to 25 wt %.

The composition may for instance comprise the one or more other polar organic solvents in an amount of from 0.1 wt % to 30 wt %, for instance in an amount of from 0.1 wt % to 25 wt %. Thus, for instance, the composition may comprise the one or more other polar organic solvents in an amount of from 1.0 wt % to 30 wt %, for instance in an amount of from 2.0 wt % to 20 wt %. For example, the composition may comprise the one or more other polar organic solvents in an amount of from 4.5 wt % to 30 wt %, for instance in an amount of from 5.0 wt % to 30 wt %, or for example in an amount of from 8.0 wt % to 30 wt %. The composition may for instance comprise the one or more other polar organic solvents in an amount of from 10.0 wt % to 30 wt %, or for instance from 15.0 wt % to 30 wt %, or for example in an amount of from 17.0 wt % to 30 wt %, for instance from 20.0 wt % to 30 wt %, for example from 20.0 wt % to 25 wt %.

In addition to the methanol, at least one alkene and at least one organosulfur compound, the composition typically further comprises at least one aromatic hydrocarbon compound (which may be as further defined herein), at least one alkane or cycloalkane (which may be as further defined herein), and said one or more other polar organic solvents (which may be as further defined above).

The composition may therefore comprise the at least one alkene in an amount of from x¹ wt % to y¹ wt % (wherein x¹ < y¹), the at least one organosulfur compound in an amount of from x² wt % to y² wt % (wherein x² < y²), the at least one aromatic hydrocarbon compound in an amount of from x³ wt % to y³ wt % (wherein x³ < y³), the at least one alkane or cycloalkane in an amount of from x⁴ wt % to y⁴ wt % (wherein x⁴ < y⁴), the one or more other polar organic solvents in an amount of from x⁵ wt % to y⁵ wt % (wherein x⁵ < y⁵), and the methanol in an amount of at least [100-(y¹+y²+y³+y⁴+y⁵)] wt %, wherein x¹, x², x³, x⁴ and x⁵ and y¹, y², y³, y⁴ and y⁵ may be as defined in any of the ranges given in the preceding paragraphs for the respective components.

The composition may comprise the at least one alkene in an amount of from 0.01 wt % to 16 wt %, the at least one organosulfur compound in an amount of from 0.001 wt % to 1.0 wt %, the at least one aromatic hydrocarbon compound in an amount of from 0.01 wt % to 8 wt %, the at least one alkane or cycloalkane in an amount of from 0.01 wt % to 10 wt %, the one or more other polar organic solvents in an amount of from 5.0 wt % to 30 wt %, and the methanol in an amount of at least 35 wt %.

Often, the methanol makes up the balance of the composition. Thus, for example, when the composition comprises the at least one alkene, the at least one organosulfur compound, the at least one aromatic hydrocarbon, the at least one alkane or cycloalkane, and the one or more other polar organic solvents, then, in some embodiments, the balance of the composition (i.e. the only other component present) is the methanol. In other embodiments, however, the composition comprises further components in addition to the aforementioned. For instance, it may further comprise water.

Thus, the composition employed in the invention typically further comprises a second polar organic solvent which is other than methanol. The second polar organic solvent may be any one of the polar organic solvents other than methanol defined above. It may for instance be an alcohol other than methanol, an aldehyde, a ketone, an ether, a carboxylic acid, an ester, a carbonate, an acid anhydride, an amide, an amine, a heterocyclic compound, an imine, an imide, a nitrile, a nitro compound, a sulfoxide, or a haloalkane, any of which may be as further defined above.

Typically, the second polar organic solvent is a polar protic organic solvent which is other than methanol. Thus, it is often a compound selected from an alcohol other than methanol, a carboxylic acid, a primary amine and a secondary amine. The second polar organic solvent may therefore be selected from ethanol, propanol, isopropanol, butanol, secbutanol, isobutanol, tertbutanol, cyclopentanol, pentanol, cyclohexanol, hexanol, heptanol, octanol, ethane-1,2-diol (ethylene glycol), propane-1,2-diol (propylene glycol), propane-1,3-diol, propane-1,2,3-triol (glycerol), isopropanediol, butanediol, isobutanediol, tertbutanediol, butanetriol, pentanediol, methylbutanediol, hexanediol, hexanetriol, methanoic acid (formic acid), ethanoic acid (acetic acid), propanoic acid, butanoic acid, pentanoic acid, ethylamine, ethylenediamine, propylenediamine, diethylenetriamine, morpholine, and piperidine.

Usually, the second polar organic solvent is an alcohol other than methanol. Thus, it may be any C₂₋₁₀ alcohol, for instance a C₂₋₄ alcohol. It may comprise one or more -OH groups. The alcohol may be a primary or a secondary alcohol, but is preferably a primary alcohol. It may for instance be selected from ethanol, propanol, isopropanol, butanol, secbutanol, isobutanol, tertbutanol, cyclopentanol, pentanol, cyclohexanol, hexanol, heptanol, octanol, ethane-1,2-diol (ethylene glycol), propane-1,2-diol (propylene glycol), propane-1,3-diol, propane-1,2,3-triol (glycerol), isopropanediol, butanediol, isobutanediol, tertbutanediol, butanetriol, pentanediol, methylbutanediol, hexanediol, hexanetriol. As described above, where the position of a hydroxy group is not explicitly stated, alcohols having that hydroxy group in each possible position is covered. For instance, octanol includes octan-1-ol, octan-2-ol, octan-3-ol and octan-4-ol. The second polar organic solvent may for instance be ethanol, propanol, isopropanol, butanol, secbutanol, isobutanol, tertbutanol, ethylene glycol, propylene glycol (propane-1,2-diol), propane-1,3-diol, glycerol (propane-1,2,3-triol), butane-1,2-diol, butane-1,3-diol, butane-1,4-diol, butane-2,3-diol, butane-1,2,3-triol, or butane-1,2,4-triol.

Preferably, the second polar organic solvent is a polyhydric alcohol. The second polar organic solvent may be a polyhydric alcohol comprising two, three or four hydroxy groups. For instance, the second polar organic solvent may be selected from ethane-1,2-diol (ethylene glycol), propane-1,2-diol (propylene glycol), propane-1,3-diol, propane-1,2,3-triol (glycerol), isopropanediol, butanediol, isobutanediol, tertbutanediol, butanetriol, pentanediol, methylbutanediol, hexanediol, and hexanetriol.

The second polar organic solvent is often for instance a dihydric alcohol. The second polar organic solvent may therefore be selected from ethane-1,2-diol (ethylene glycol), propane-1,2-diol (propylene glycol), propane-1,3-diol, isopropanediol, butanediol, isobutanediol, tertbutanediol, pentanediol, methylbutanediol, and hexanediol. For instance, the second polar organic solvent may be selected from ethane-1,2-diol (ethylene glycol), propane-1,2-diol (propylene glycol), and propane-1,3-diol.

Preferably, the second polar organic solvent is ethylene glycol or propylene glycol. More preferably the second polar organic solvent is ethylene glycol.

Typically, the composition comprises the second polar organic solvent in an amount of at least 0.01 % by weight (wt %). The composition may for instance comprise the second polar organic solvent in an amount of at least 0.1 wt %, or, for instance, in an amount of at least 1.0 wt %, for instance an amount of at least 2.0 wt %, or for example an amount of at least 4.5 wt %. It may for instance comprise the second polar organic solvent in an amount of at least 5.0 wt %, or for instance in an amount of at least 7.0 wt %, or in an amount of at least 10.0 wt %. The composition optionally, for instance, comprises the second polar organic solvent in an amount of at least 15.0 wt %, or for instance in an amount of at least 17.0 wt %, or an amount of at least 20.0 wt %.

Typically, the composition comprises the second polar organic solvent in an amount of from 0.01 wt % to 30 wt %, for instance in an amount of from 0.01 wt % to 25 wt %.

The composition may for instance comprise the second polar organic solvent in an amount of from 0.1 wt % to 30 wt %, for instance in an amount of from 0.1 wt % to 25 wt %. Thus, for instance, the composition may comprise the second polar organic solvent in an amount of from 1.0 wt % to 30 wt %, for instance in an amount of from 2.0 wt % to 20 wt %. For example, the composition may comprise the second polar organic solvent in an amount of from 4.5 wt % to 30 wt %, for instance in an amount of from 5.0 wt % to 30 wt %, or for example in an amount of from 8.0 wt % to 30 wt %. The composition may for instance comprise the second polar organic solvent in an amount of from 10.0 wt % to 30 wt %, or for instance from 15.0 wt % to 30 wt %, or for example in an amount of from 17.0 wt % to 30 wt %, for instance from 20.0 wt % to 30 wt %, for example from 20.0 wt % to 25 wt %.

In addition to the methanol, at least one alkene and at least one organosulfur compound, the composition typically further comprises at least one aromatic hydrocarbon compound (which may be as further defined herein), at least one alkane or cycloalkane (which may be as further defined herein), and said second polar organic solvent (which may be as further defined above).

The composition may comprise the at least one alkene in an amount of from x¹ wt % to y¹ wt % (wherein x¹ < y¹), the at least one organosulfur compound in an amount of from x² wt % to y² wt % (wherein x² < y²), the at least one aromatic hydrocarbon compound in an amount of from x³ wt % to y³ wt % (wherein x³ < y³), the at least one alkane or cycloalkane in an amount of from x⁴ wt % to y⁴ wt % (wherein x⁴ < y⁴), the second polar organic solvent in an amount of from x⁵ wt % to y⁵ wt % (wherein x⁵ < y⁵), and the methanol in an amount of at least [100-(y¹+y²+y³+y⁴+y⁵)] wt %, wherein x¹, x², x³, x⁴ and x⁵ and y¹, y², y³, y⁴ and y⁵ may be as defined in any of the ranges given in the preceding paragraphs for the respective components.

For example, the composition may comprise the at least one alkene in an amount of from 0.01 wt % to 16 wt %, the at least one organosulfur compound in an amount of from 0.001 wt % to 1.0 wt %, the at least one aromatic hydrocarbon compound in an amount of from 0.01 wt % to 8 wt %, the at least one alkane or cycloalkane in an amount of from 0.01 wt % to 10 wt %, the second polar organic solvent in an amount of from 5.0 wt % to 30 wt %, and the methanol in an amount of at least 35 wt %.

Often, the methanol makes up the balance of the composition. Thus, for example, when the composition comprises the at least one alkene, the at least one organosulfur compound, the at least one aromatic hydrocarbon, the at least one alkane or cycloalkane, and the second polar organic solvent, then, in some embodiments, the balance of the composition (i.e. the only other component present) is the methanol. In other embodiments, however, the composition comprises further components in addition to the aforementioned.

The composition may for instance comprise the at least one alkene in an amount of from 0.01 wt % to 16 wt %, the at least one organosulfur compound in an amount of from 0.001 wt % to 1.0 wt %, the at least one aromatic hydrocarbon compound in an amount of from 0.01 wt % to 8 wt %, the at least one alkane or cycloalkane in an amount of from 0.01 wt % to 10 wt %, the methanol in an amount of at least 50 wt % and the second polar organic solvent in an amount of at least 15 wt %. The ranges for any of the components may however be as further defined hereinbefore, and the methanol typically makes up the balance of the composition.

Typically, the composition employed in the process of the invention further comprises a second polar organic solvent which is ethylene glycol.

Thus, typically, the composition employed in the process of the invention comprises said methanol, the at least one alkene, the at least one organosulfur compound, the at least one aromatic hydrocarbon, the at least one alkane or cycloalkane, and ethylene glycol. The amounts of the at least one alkene, the at least one organosulfur compound, the at least one aromatic hydrocarbon, the at least one alkane or cycloalkane, and the ethylene glycol (i.e. the second polar organic solvent) in the composition may be as further defined hereinbefore, with the methanol making up the balance of the composition.

The methanol and the one or more other polar organic solvents may be in any proportion in the composition. The ratio of the amounts by weight of the methanol to the one or more other polar organic solvents may for instance be from 10:1 to 1:5. The ratio of the methanol to the one or more other polar organic solvents is often from 7:1 to 1:2. The ratio of the methanol to the one or more other polar organic solvents may be from 5:1 to 1:1. For instance, the ratio of the methanol to the one or more other polar organic solvents may be from 4:1 to 2:1. Preferably, the ratio of the methanol to the one or more other polar organic solvents is from 7:2 to 5:2. The ratio of the methanol to the one or more other polar organic solvents may for instance be about 3:1. The one or more other polar organic solvents may be as further defined above. They typically consist of said second polar organic solvent. Typically, the one or more other polar organic solvents consist of ethylene glycol.

The composition which is employed in the process of the invention may further comprise water.

The process of the invention comprises contacting the composition with a solid acid catalyst.

Solid acid catalysts are well known to the skilled person. Well known examples include zeolites, alumina, and various other metal oxides.

The solid acid catalyst employed in the present invention may comprise an acidic zeolite. As the skilled person will appreciate, aluminosilicate zeolites comprise SiO₄ and AlO₄ tetrahedra, and each AlO₄ tetrahedron, with its trivalent aluminium, bears an extra negative charge, which is balanced by mono-, bi- or tri- valent cations. Such zeolites are often prepared in their sodium form. However, surface acidity can be generated (to produce an acidic zeolite) by replacing Na⁺ by H⁺. Protons can be introduced into the structure through ion-excanged forms, hydrolysis of water, or hydration of cations or reduction of cations to a lower valency state. In the case of hydrogen zeolites, protons associated with the negatively charged framework aluminium are the source of Brönsted acid activity and a linear relationship between catalytic activity and the concentration of protonic sites associated with framework aluminium has been demonstrated (W. O. Haag et al., Nature, 309, 589, 1984).

Typically, therefore, the solid acid catalyst employed in the present invention comprises a hydrogen zeolite (an H-zeolite). This may for instance be H-ZSM-5, H-Beta, H-Y or H-Mordenite. Acidic silicon aluminium phosphate (SAPO) zeolites may also be employed, for instance SAPO-34. SBA is also a suitable zeolite catalyst that may be employed.

The solid acid catalyst may alternatively, for instance, be an acidic metal oxide or an acidic mixed metal oxide. Examples of acidic metal oxides and acidic mixed metal oxides that may be suitably employed include ZnO, VOPO₄ (e.g. VOPO₄.2H₂O), ZrO₂/WO₃²⁻, ZrO₂/SO₄²⁻, Al₂O₃/PO₄³⁻, Al₂O₃/TiO₂/ZnO, Al₂O₃/ZrO₂/WO₃ and TiO₂/SO₄²⁻.

Other suitable solid acid catalysts include solid heteropolyacids. Suitable solid heteropolyacids include, for example, CsₓHₓ-3PW₁₂O₄₀, H₃PW₁₂O₄₀.6H₂O, H₃PW₁₂O₄₀/K-10 clay, Ag_{0.5}H_{2.5}PW₁₂O₄₀, Zr_{0.7}H_{0.2}PW₁₂O₄₀ and H₃PW₁₂O₄₀/ZrO₂.

Usually, however, the solid acid catalyst comprises an acidic aluminosilicate zeolite or an acidic silicon aluminium phosphate (SAPO) zeolite.

In preferred embodiments, the solid acid catalyst comprises an acidic aluminosilicate zeolite.

Acidic aluminosilicate zeolite having the general formula (I) may for instance be employed:

[Mⁿ⁺]_{x/n}[(AlO₂⁻)ₓ(SiO₂)_{y}] (1)

wherein
M is H⁺ or M is two or more different cations, one of which is H⁺; and
the Si/Al ratio y/x is from 1 to 300.

The Si/Al ratio y/x may for instance be from 30 to 90, for instance from 40 to 80, or for example from 50 to 70, or from 55 to 65.

When M is two or more different cations, one of which is H⁺, the charge ratio of H⁺ to the other cations M is typically equal to or greater than 1. In other words at least half of the positive charges arising from all the Mⁿ⁺ cations are typically due to protons.

Usually, the solid acid catalyst is H-ZSM-5.

Typically, the solid acid catalyst is H-ZSM-5 with an Si/Al ratio of from 30 to 90, for instance from 40 to 80, or for example from 50 to 70, or from 55 to 65. H-ZSM-5 with an Si/Al ratio of about 60 is particularly preferred. Such H-ZSM-5 catalysts are commercially available from ZEOLYST international Company.

Regarding typical process conditions, the contacting of the composition with the solid acid catalyst is typically performed at an elevated temperature. Thus the process typically comprises contacting the composition with the solid acid catalyst at a temperature of above ambient. This means that the temperature is typically above 25 °C. It is often significantly above 25 °C, for instance above 250 °C, or for example above 280 °C, and preferably above 300 °C, more preferably above 310 °C.

Often, for instance, the process comprises contacting the composition with the solid acid catalyst at a temperature of equal to or greater than 250 °C, more typically greater than 280 °C. The process may for instance, comprise contacting the composition with the solid acid catalyst at a temperature of equal to or greater than 300 °C, or for instance, at a temperature of equal to or greater than 310 °C, or for example equal to or greater than 320 °C, such as, for instance, equal to or greater than 330 °C.

In a preferred emobodiment, the process comprises contacting the composition with the solid acid catalyst at a temperature of equal to or greater than 320 °C, more typically greater than 320 °C, for instance equal to or greater than 340 °C.

The process may for instance comprise contacting the composition with the solid acid catalyst at a temperature of from 250 °C to 800 °C, more typically from 280 °C to 700 °C, or for instance from 280 °C to 650 °C. The process may for instance, comprise contacting the composition with the solid acid catalyst at a temperature of from 300 °C to 500 °C, or for instance, at a temperature of from 305 °C to 500 °C, such as for example from 310 °C to 480 °C, or for instance from 320 °C to 465 °C, or from 330 °C to 450 °C. Often, for instance, the process, comprises contacting the composition with the solid acid catalyst at a temperature of from 300 °C to 450 °C, or for instance, at a temperature of from 310 °C to 420 °C, or for example from 320 °C to 380 °C, such as, for instance, from 330 °C to 370 °C.

In a preferred emobodiment, the process comprises contacting the composition with the solid acid catalyst at a temperature of from 325 °C to 650 °C, or for instance from 325 °C to 500 °C, for example from 325 °C to 450 °C, or from 325 °C to 425 °C.

Usually, the process is carried out at the above temperatures at ambient pressure, for instance at about 1 atmosphere (atm). However, elevated pressures may also be employed. Thus, said contacting may comprises contacting the composition with the solid acid catalyst at a pressure of equal to or greater than 1 atm. Typically at this pressure, the temperature is as defined above.

Although the process may operate in a batch mode, a continuous mode is generally employed. Thus, the process typically comprises continuously feeding said composition over the catalyst.

Accordingly, usually, said contacting comprises co-feeding the components of said composition over the solid acid catalyst.

Any suitable space velocity may be employed. The contacting may for instance comprise co-feeding the components of the composition over the solid acid catalyst at a weight hour space velocity of equal to or greater than 0.5 hr⁻¹. Often, for instance the weight hour space velocity is equal to or greater than 1.0 hr⁻¹, for instance equal to or greater than 1.5 hr⁻¹, or for example equal to or greater than 2.0 hr⁻¹. The space velocity may for instance be from 0.5 hr⁻¹ to 10 hr⁻¹.

In one preferred embodiment, the process is for producing one or more aromatic hydrocarbons from said methanol;
the composition further comprises at least one alkane and at least one aromatic hydrocarbon compound;
the solid acid catalyst comprises H-ZSM-5 (which may be as further defined above); and
said contacting comprises co-feeding the components in the composition over the solid acid catalyst at a weight hour space velocity of equal to or greater than 1 hr⁻¹, at a temperature of from 325 °C to 450 °C, and at a pressure of equal to or greater than 1 atm.

Usually, in this preferred embodiment, the composition comprises the at least one alkene in an amount of from 0.5 wt % to 20 wt %, the at least one organosulfur compound in an amount of from 0.001 wt % to 1.0 wt %, the at least one aromatic hydrocarbon compound in an amount of from 0.5 wt % to 15 wt %, the at least one alkane in an amount of from 0.5 wt % to 15 wt %, and the methanol in an amount of at least 49 wt %. However, the amounts of all these components may be as further defined hereinbefore.

Also, usually, in this preferred embodiment, the at least one alkene comprises one or more alkenes selected from C₄₋₁₂ alkenes and C₅₋₈ cycloalkenes, the at least one organosulfur compound comprises one or more C₄₋₁₀ organosulfur compounds, the at least one aromatic hydrocarbon compound comprises one or more C₆₋₁₂ aromatic hydrocarbons, and the at least one alkane comprises one or more C₄₋₁₂ alkanes. More typically, in this preferred embodiment, the at least one alkene includes a C₆ alkene, the at least one aromatic hydrocarbon compound includes a C₅ aromatic hydrocarbon, the at least one alkane includes a C₅ alkane, and the at least one organosulfur compound includes one or more compounds selected from substituted or unsubstituted thiophene, substituted or unsubstituted benzothiophene, and substituted or unsubstituted dibenzothiophene. Usually, in this preferred embodiment, when the organosulfur compound is substituted, it is substituted with from one to four C₁₋₆ alkyl groups. Preferably, in this preferred embodiment, the at least one alkene includes 1-hexene or 1-pentene, the at least one aromatic hydrocarbon includes p-xylene, the at least one alkane in the composition, includes n-octane, and the at least one organosulfur compound in the composition includes thiophene.

In another preferred embodiment, the process is for producing one or more aromatic hydrocarbons from said methanol;
the composition further comprises at least one alkane, at least one aromatic hydrocarbon compound, and ethylene glycol;
the solid acid catalyst comprises H-ZSM-5 (which may be as further defined above); and
said contacting comprises co-feeding the components in the composition over the solid acid catalyst at a weight hour space velocity of equal to or greater than 1 hr⁻¹, at a temperature of from 325 °C to 450 °C, and at a pressure of equal to or greater than 1 atm.

Usually, in this other preferred embodiment, the composition comprises the at least one alkene in an amount of from 0.5 wt % to 16 wt %, the at least one organosulfur compound in an amount of from 0.001 wt % to 1.0 wt %, the at least one aromatic hydrocarbon compound in an amount of from 0.5 wt % to 8 wt %, the at least one alkane in an amount of from 0.5 wt % to 10 wt %, the methanol in an amount of at least 50 wt % and ethylene glycol in an amount of at least 15 wt %. The weight ratio of the methanol to the ethylene glycol may be as further defined hereinbefore. Also, the amounts of all the components in the composition may be as further defined hereinbefore.

Also, usually, in this other preferred embodiment, the at least one alkene comprises one or more alkenes selected from C₄₋₁₂ alkenes and C₅₋₈ cycloalkenes, the at least one organosulfur compound comprises one or more C₄₋₁₀ organosulfur compounds, the at least one aromatic hydrocarbon compound comprises one or more C₆₋₁₂ aromatic hydrocarbons, and the at least one alkane comprises one or more C₄₋₁₂ alkanes. More typically, in this preferred embodiment, the at least one alkene includes a C₆ alkene, the at least one aromatic hydrocarbon compound includes a C₅ aromatic hydrocarbon, the at least one alkane includes a C₅ alkane, and the at least one organosulfur compound includes one or more compounds selected from substituted or unsubstituted thiophene, substituted or unsubstituted benzothiophene, and substituted or unsubstituted dibenzothiophene. Usually, in this preferred embodiment, when the organosulfur compound is substituted, it is substituted with from one to four C₁₋₆ alkyl groups. Preferably, in this preferred embodiment, the at least one alkene includes 1-hexene or 1-pentene, the at least one aromatic hydrocarbon includes p-xylene, the at least one alkane in the composition, includes n-octane, and the at least one organosulfur compound in the composition includes thiophene.

In yet another preferred embodiment, the process is for producing one or more aromatic hydrocarbons from said methanol;
the composition further comprises at least one alkane, at least one aromatic hydrocarbon compound, and one or more further polar organic solvents other than methanol (which may be as further defined hereinbefore);
the solid acid catalyst comprises H-ZSM-5 (which may be as further defined above); and
said contacting comprises co-feeding the components in the composition over the solid acid catalyst at a weight hour space velocity of equal to or greater than 1 hr⁻¹, at a temperature of from 325 °C to 450 °C, and at a pressure of equal to or greater than 1 atm.

Usually, in this yet other preferred embodiment, the composition comprises the at least one alkene in an amount of from 0.5 wt % to 16 wt %, the at least one organosulfur compound in an amount of from 0.001 wt % to 1.0 wt %, the at least one aromatic hydrocarbon compound in an amount of from 0.5 wt % to 8 wt %, the at least one alkane in an amount of from 0.5 wt % to 10 wt %, the methanol in an amount of at least 50 wt % and the one or more further polar organic solvents in an amount of at least 15 wt %. The weight ratio of the methanol to the one or more further polar organic solvents may be as further defined hereinbefore. Also, the amounts of all the components in the composition may be as further defined hereinbefore.

Also, usually, in this yet other preferred embodiment, the at least one alkene comprises one or more alkenes selected from C₄₋₁₂ alkenes and C₅₋₈ cycloalkenes, the at least one organosulfur compound comprises one or more C₄₋₁₀ organosulfur compounds, the at least one aromatic hydrocarbon compound comprises one or more C₆₋₁₂ aromatic hydrocarbons, and the at least one alkane comprises one or more C₄₋₁₂ alkanes. More typically, in this preferred embodiment, the at least one alkene includes a C₆ alkene, the at least one aromatic hydrocarbon compound includes a C₅ aromatic hydrocarbon, the at least one alkane includes a C₅ alkane, and the at least one organosulfur compound includes one or more compounds selected from substituted or unsubstituted thiophene, substituted or unsubstituted benzothiophene, and substituted or unsubstituted dibenzothiophene. Usually, in this preferred embodiment, when the organosulfur compound is substituted, it is substituted with from one to four C₁₋₆ alkyl groups. Preferably, in this preferred embodiment, the at least one alkene includes 1-hexene or 1-pentene, the at least one aromatic hydrocarbon includes p-xylene, the at least one alkane in the composition, includes n-octane, and the at least one organosulfur compound in the composition includes thiophene.

Typically, the above-described preferred embodiments are for producing C₆₋₁₂ aromatic hydrocarbons from said methanol, optionally wherein the one or more C₆₋₁₂ aromatic hydrocarbons include benzene substituted with one, two, three or four methyl groups, preferably wherein the C₆₋₁₂ aromatic hydrocarbons include toluene, o-xylene, m-xylene, p-xylene, and 1,2,3-trimethylbenzene.

The inventors have surprisingly found that the organosulfur compound in the feedstock can successfully be removed or reduced by hydrodesulfurization (HDS), which may explain why detrimental catalyst poisoning effects were not observed.

Accordingly, the process of the invention typically further comprises hydrodesulfurization of the least one organosulfur compound. Said hydrodesulfurization of the least one organosulfur compound typically comprises reaction of the least one organosulfur compound with hydrogen generated in situ. The reaction generally produces H₂S and one or more further hydrocarbons.

The process of the invention typically further comprises recovering the one or more hydrocarbons.

The composition which is employed in the process of the invention is typically one which is obtainable by an extraction process comprising:
(a) contacting gasoline obtainable by a fluid catalytic cracking process, which gasoline comprises at least one alkene and at least one organosulfur compound, with an extraction solvent suitable for extracting alkenes and organosulfur compounds, which extraction solvent comprises said methanol, and thereby forming
   (i) a first phase comprising said extraction solvent which comprises said methanol, at least one extracted alkene, and at least one extracted organosulfur compound, and
   (ii) a second phase comprising gasoline having a reduced alkene content and a reduced organosulfur content compared to said gasoline obtainable by a fluid catalytic cracking process,
   and
(b) recovering at least part of the first phase for use as the composition.

The process of the invention may therefore further comprise, obtaining the composition by said extraction process.

The term "fluid catalytic cracking process", as used herein, refers to any process whereby high molecular weight hydrocarbons are converted to lower molecular weight hydrocarbons. The term is well known in the art. Typically, this involves a process whereby hydrocarbons having a boiling point of greater than 340°C are converted to lower boiling point (less that or equal to 340°C, or typically less than or equal to 200°C) hydrocarbons by a catalytic process. A variety of catalysts may be used in an FCC process. Typically, a solid acid catalyst such as a zeolite catalyst is used, for instance a faujasite or zeolite Y catalyst. An FCC process may convert long chain alkanes (for instance, C₁₁₋₂₀ alkanes) to shorter chain hydrocarbons including alkanes, cycloalkanes and alkenes (for instance C₃₋₁₀ alkanes, C₃₋₁₀ alkenes, C₄₋₁₀ cycloalkanes). Gasoline produced by an FCC process typically has a greater alkene content than gasoline obtained by fractional distillation of crude oil.

The term "alkene content", as used herein, refers to the total amount of all alkene compounds in a composition. The alkene content of a composition is typically measured as a weight percentage of total alkene compounds present in the composition, relative to the weight of the composition. If a composition comprises a single alkene compound, the alkene content is the percentage by weight of the single alkene compound relative to the weight of the composition. If a composition comprises two or more alkene compounds, the alkene content is the percentage by weight of the sum of the weights of all alkene compounds present relative to the weight of the composition. If a composition comprises a cylcoalkene compound, this also contributes to the alkene content.

The term "organosulfur content", as used herein, refers to the total amount of all organosulfur compounds in a composition. The organosulfur content of a composition is typically measured as a weight percentage of total organosulfur compounds present in the composition, relative to the weight of the composition. If a composition comprises a single organosulfur compound, the organosulfur content is the percentage by weight of the single organosulfur compound relative to the weight of the composition. If a composition comprises two or more organosulfur compounds, the organosulfur content is the percentage by weight of the sum of the weights of all organosulfur compounds present relative to the weight of the composition.

The term "reduced alkene content" or "reduced organosulfur content", as used herein, refers to a reduction of the alkene or organosulfur content relative to the untreated gasoline obtainable by an FCC process.

Usually, in the extraction process, the gasoline obtainable by a fluid catalytic cracking process further comprises at least one aromatic hydrocarbon compound and at least one alkane or cycloalkane, and the first phase further comprises at least one extracted aromatic hydrocarbon compound and at least one extracted alkane or cycloalkane. The at least one aromatic hydrocarbon compound and the at least one extracted aromatic hydrocarbon compound may be as further defined hereinbefore for the at least one aromatic hydrocarbon compound in the composition which is employed in the process of the invention. Similarly, the at least one alkane or cycloalkane, and the at least one extracted alkane or cycloalkane, may be as further defined hereinbefore for the at least one alkane and at least one cycloalkane in the composition which is employed in the process of the invention.

The extraction solvent may further comprises one or more further polar organic solvents other than methanol, which may be as further defined hereinbefore for the composition which is employed in the process of the invention.

Indeed, the extraction solvent may further comprises a second polar organic solvent, which may be as further defined hereinbefore for the composition which is employed in the process of the invention.

Typically, the extraction solvent may further comprises ethylene glycol. The ratio of the methanol to the ethylene glycol in the extraction solvent may be as further defined hereinbefore.

In the extraction process, the gasoline obtainable by a fluid catalytic cracking (FCC) process (also referred to as "FCC gasoline") may be contacted with the extraction solvent by any method. Typically, the FCC gasoline and the extraction solvent are contacted by mixing. Thus, the process may comprise mixing gasoline obtainable by a fluid catalytic cracking process with an extraction solvent. For instance, the FCC gasoline and the extraction solvent may be added to a vessel, reactor or mixer and the two components may be mixed. Mixing may comprise agitation of the two components by a mixing means. For instance, the two components may be mixed together by stirring or by shaking.

In the extraction process, it is preferable that the FCC gasoline and extraction solvent are mixed to an extent to allow effective extraction of alkene compounds and organosulfur compounds from the FCC gasoline. Typically, contacting gasoline obtainable by an FCC process with the extraction solvent will comprise mixing the two components to an extent that a large interface (with a high surface area) is formed between the two components, allowing extraction of alkene compounds and organosulfur compounds by the extraction solvent. A large interface occurs when the surface area of the interface between the mixed components is 3 or more times greater that the surface area of the interface between the contacted, but unmixed, components. Typically, contacting the gasoline obtainable by an FCC process with the extraction solvent comprises mixing the gasoline and the extraction solvent to form an emulsion, and allowing the emulsion to separate, thereby forming said first and second phases. Any emulsion formed may be an extraction solvent-in-gasoline emulsion or a gasoline-in-extraction solvent emulsion. Typically any emulsion formed will separate due to gravity.

In the extraction process, the contacting of the two components may occur more than once. For instance after contacting the gasoline and the extraction solvent for the first time, the resulting two phases may be contacted again by mixing. The steps of contacting and formation of two phases may be continuous. Thus, the two components may pass through a mixing means before entering a separating chamber in which the first and second phases are formed. The contacting of the two components may be performed using a propeller, an agitation means, a Scheibel® column, a KARR® column or a centrifugal extractor.

In the extraction process, the first phase and the second phase may be formed in the same container, or may be formed in separate containers. Typically, the first and second phase will form in the same container. The first or second phase may then be recovered. Generally, the first phase and the second phase are immiscible under the conditions of the extraction process. One of the first phase and the second phase will have a density greater than the other phase. The phase with the greater density will form the lower of the two phases. Generally, the extraction solvent, which comprises methanol, will have a greater density that gasoline. Thus, the first phase may be a lower phase and the second phase may be an upper phase. The first phase is generally a liquid phase. The second phase is generally a liquid phase.

In the extraction process, the first phase comprises said extraction solvent comprising methanol, at least one extracted alkene, and at least one extracted organosulfur compound. The first phase may be homogenous. Typically, the at least one extracted alkene and the at least one organosulfur compound are dissolved in the extraction solvent. The first phase may comprise additional components such as other extracted compounds from the gasoline. Other extracted compounds may include one or more alkanes and one or more aromatic hydrocarbons, which may be as further defined hereinbefore. The first phase may comprise greater than 60 wt% of the extraction solvent, the at least one extracted alkene and the at least one extracted organosulfur compound, wherein the percentage by weight is relative to the total weight of the first phase. The first phase may comprise greater than 70 wt% of the extraction solvent, the at least one extracted alkene and the at least one extracted organosulfur compound. The first phase may comprise greater than 80 wt% of the extraction solvent, the at least one extracted alkene and the at least one extracted organosulfur compound. The first phase may comprise greater than 90 wt% of the extraction solvent, the at least one extracted alkene and the at least one extracted organosulfur compound. The first phase may consist essentially of the extraction solvent, the at least one extracted alkene and the at least one extracted organosulfur compound.

The first phase is generally as described herein for the composition which is employed in the process of the invention for producing one or more hydrocarbons from methanol.

The second phase comprises gasoline having a reduced alkene content and a reduced organosulfur content compared to said (untreated) gasoline obtainable by a fluid catalytic cracking process. The second phase may comprise additional components such as the extraction solvent. Typically, the second phase comprises less than 10 wt% of the extraction solvent, wherein the weight percentage is relative to the total weight of the second phase. The second phase may comprise less than 5 wt% of the extraction solvent. The second phase may comprise less than 2 wt% of the extraction solvent. The second phase may comprise less than 1 wt% of the extraction solvent. The second phase may consist essentially of gasoline having a reduced alkene content and a reduced organosulfur content compared to said gasoline obtainable by a fluid catalytic cracking process.

The extraction process comprises recovering at least part of the first phase for use as the composition. Said first phase is generally as described herein for the composition which is employed in the process of the invention for producing one or more hydrocarbons from methanol. Thus, said at least part of the first phase comprises said extraction solvent which comprises methanol, and optionally one or more further polar organic solvents other than methanol, such as for instance ethylene glycol, at least one extracted alkene, and at least one extracted organosulfur compound, and optionally for instance one or more alkanes and one or more aromatic hydrocarbons, which may be as further defined hereinbefore. The first phase may be recovered by any means, and is typically recovered by a physical process. The recovering typically comprises physically isolating the, or at least some of the, first phase. Thus, said recovering typically comprises separating at least some of the first phase from the second phase. However, as the two phases may already be separate in the same container due to their immiscibility, said recovering may comprise directing at least part of the first phase from a container comprising the first phase and the second phase. Said recovering may comprise removing at least part of the first phase from a container comprising the first phase and the second phase. The at least part of the first phase may alternatively be recovered by removing the second phase to leave the first phase.

The extraction process may be performed at low temperatures and often does not require distillation steps, which may be associated with additional energy usage and expense. Thus, in some embodiments, the extraction process does not further comprise a distillation step. The extraction process may for instance not comprise a step of heating the first phase or the second phase to a temperature of greater than or equal to 150°C or greater than or equal to 100°C.

Unlike known extraction processes for removing alkenes from gasoline obtainable by an FCC process, the extraction process herein requires only mild conditions of temperature and pressure. There is no requirement for high temperatures and pressures as in catalytic processes, or high temperature gradients as in distillation methods, for instance cryogenic distillation.

The extraction process may be carried out at a temperature of less than or equal to 300°C. The extraction process is typically carried out at a temperature of less than or equal to 200°C. Preferably, the extraction process is carried out at a temperature of less than or equal to 150°C. For instance, the extraction process is often carried out at a temperature of less than or equal to 100°C.

The extraction process may be carried out at an absolute pressure of less than or equal to 0.5 MPa (which is approximately 5 atmospheres). Usually, the extraction process is carried out at an absolute pressure of less than or equal to 0.3 MPa. Preferably, the extraction process is carried out at an absolute pressure of less than or equal to 0.2 MPa. For instance, the extraction process may be carried out at ambient pressure (i.e. 1 atmosphere). Absolute pressure is pressure relative to the vacuum.

The ratio of the amount of the gasoline obtainable by an FCC process and the amount of the extraction solvent may be varied to optimise the extraction. Many solvents are cheap and readily available in large volumes.

Typically, the ratio by weight of the gasoline obtainable by a fluid catalytic cracking process to the extraction solvent is from 5:1 to 1:5. Thus, 1 part extraction solvent may be used to 5 parts gasoline, or 5 parts extraction solvent may be used to 1 part gasoline. Often, the ratio by weight of the gasoline obtainable by a fluid catalytic cracking process to the extraction solvent is from 3:1 to 1:3. For instance, the ratio of FCC gasoline to the extraction solvent may be from 2:1 to 1:2. Preferably, the ratio is from 3:2 to 2:3. For instance, the ratio may be about 1:1, for instance from 1.2:1 to 1:1.2.

The extraction process allows the alkene content and organosulfur content of FCC gasoline to be reduced. This produces gasoline which may comply with increasingly stringent regulations regarding alkene and organosulfur content.

As discussed above, fluid catalytic cracking can produce gasoline from heavier crude oil fractions. However, due to the cracking process, the gasoline produced has a high alkene content compared to that of gasoline obtained directly as a fraction from crude oil.

The extraction process comprises contacting gasoline obtainable by a fluid catalytic cracking process. The gasoline may be gasoline obtained by an FCC process. The FCC process may be any FCC process.

The compositions of two gasolines produced by an FCC process are shown in Tables 1 and 2. Table 1 shows the composition of Daqing FCC gasoline. Table 2 shows the composition of commercial FCC gasoline from a petroleum refinery in Hubei, China. In both instances, the amount of alkenes is greater than 40 wt%.

**Group composition of Daqing FFC gasoline**

| | Composition (wt %) | | | | | | | | | | |
|---|---|---|---|---|---|---|---|---|---|---|---|
| Carbon number | Total | 3 | 4 | 5 | 6 | 7 | 8 | 9 | 10 | 11 | 12 |
| Alkanes | 31.1 | 0.1 | 0.2 | 3.1 | 1.8 | 6.4 | 7.4 | 4.5 | 1.9 | 4.4 | 1.3 |
| Alkenes | 45.2 | 0.1 | 1.1 | 5.7 | 11.8 | 9.4 | 9.7 | 3.5 | 1.7 | 2.2 | 0.0 |
| Cycloalkanes | 6.7 | 0.0 | 0.0 | 0.5 | 1.3 | 2.3 | 1.4 | 1.3 | 0.0 | 0.0 | 0.0 |
| Aromatics | 17.0 | 0.0 | 0.0 | 0.0 | 0.6 | 0.3 | 7.5 | 7.0 | 1.3 | 0.2 | 0.0 |

**Group composition of commercial FCC gasoline from a refinery**

| | Composition (wt %) | | | | | | |
|---|---|---|---|---|---|---|---|
| Carbon number | Total | 4 | 5 | 6 | 7 | 8 | 9 |
| Alkanes | 45.7 | 0.8 | 15.9 | 16.6 | 8.5 | 3.9 | - |
| Alkenes | 49.3 | 10.2 | 22.2 | 10.8 | 4.2 | 1.9 | - |
| Aromatics | 5.0 | - | - | - | 3.0 | 1.0 | 1.0 |

Therefore, the gasoline obtainable by a fluid catalytic cracking process typically comprises greater than 20 wt% of alkenes, wherein the percentage by weight is relative to the total mass of the gasoline obtainable by a fluid catalytic cracking process. In some cases, the gasoline obtainable by a fluid catalytic cracking process may comprise greater than 10 wt% of alkenes. Often, the gasoline obtainable by a fluid catalytic cracking process comprises greater than 30 wt% of alkenes, wherein the percentage by weight is relative to the total mass of the gasoline obtainable by a fluid catalytic cracking process. "Alkenes", as referred to herein, also includes cycloalkenes.

More typically, the gasoline obtainable by a fluid catalytic cracking process comprises greater than 35 wt% of alkenes, wherein the percentage by weight is relative to the total mass of the gasoline obtainable by a fluid catalytic cracking process.

Typically, the gasoline obtainable by an FCC process comprises: (i) alkanes and cycloalkanes in an amount of greater than or equal to 20 wt%; (ii) alkenes in an amount of greater than or equal to 20 wt%; and (iii) aromatic hydrocarbons in an amount of greater than or equal to 3 wt%. Typically, the gasoline obtainable by an FCC process further comprises (iv) organosulfur compounds in an amount of greater than or equal to 0.05 wt%. The total amount of components (i) to (iii), or (i) to (iv), is typically greater than or equal to 80 wt% of the gasoline obtainable by an FCC process. The gasoline obtainable by an FCC process may consist essentially of components (i) to (iii) or (i) to (iv).

Often, the gasoline obtainable by an FCC process comprises:
(i) alkanes and cycloalkanes in an amount of from 20 wt% to 60 wt%;
(ii) alkenes in an amount of greater than or equal to 20 wt% to 60 wt%;
(iii) aromatic hydrocarbons in an amount of from 3 wt% to 20 wt%; and
(iv) organosulfur compounds in an amount of from 0.05 wt% to 2 wt%,
wherein the total amount of components (i) to (iv) is greater than or equal to 80 wt%, or greater than or equal to 90 wt%.

The gasoline obtainable by an FCC process may consist essentially of:
(i) alkanes and cycloalkanes in an amount of from 20 wt% to 60 wt%;
(ii) alkenes in an amount of greater than or equal to 20 wt% to 60 wt%;
(iii) aromatic hydrocarbons in an amount of from 3 wt% to 20 wt%; and
(iv) organosulfur compounds in an amount of from 0.05 wt% to 2 wt%.

For instance, the gasoline obtainable by an FCC process may comprise:
(i) alkanes and cycloalkanes in an amount of from 20 wt% to 45 wt%;
(ii) alkenes in an amount of greater than or equal to 40 wt% to 55 wt%;
(iii) aromatic hydrocarbons in an amount of from 3 wt% to 20 wt%; and
(iv) organosulfur compounds in an amount of from 0.05 wt% to 2 wt%
wherein the total amount of components (i) to (iv) is greater than or equal to 80 wt%, or greater than or equal to 90 wt%.

The alkenes may be as defined above for those present in the composition employed in the process of the invention. For instance the alkenes are typically one or more alkenes selected from C₄₋₁₂ alkenes and C₅₋₈ cycloalkenes. The alkenes may be one or more compounds selected from butene, pentene, methylbutene, hexene, methylpentene, dimethylbutene, heptene, methylhexene, dimethylpentene, octene, methylheptene, nonene, decene, undecene, dodecene and C₅₋₈ cylcoalkenes as defined herein. For instance, the alkenes may be one or more compounds selected from pentene, methylbutene, hexene, methylpentene, dimethylbutene, ethylbutene, heptene, methylhexene, dimethylpentene, octene, methylheptene, and nonene.

Typically, the alkanes and cycloalkanes present in the FCC gasoline are one or more compounds selected from C₄₋₁₂ alkanes and C₅₋₈ cycloalkanes. For instance, the alkanes and cycloalkanes may be one or more alkanes and cycloalkanes selected from butane, isobutane, pentane, isopentane, hexane, methylpentane, dimethylbutane, heptane, methylhexane, dimethylpentane, octane, methylheptane, dimethylhexane, trimethylpentane, nonane, decane, undecane, dodecane, cyclopentane, cyclohexane, methylcyclopentane, cycloheptane, methylcyclohexane, dimethylcyclopentane and cyclooctane.

The aromatic hydrocarbons present in the FCC gasoline may be as defined above for those that may be present in the composition which is employed in ther process of the invention. For instance, they may comprise any C₆₋₁₂ aromatic hydrocarbons. For instance the aromatic hydrocarbons may be one or more compounds selected from benzene, toluene, xylene, ethylbenzene, methylethylbenzene, diethylbenzene, naphthalene, methylnaphthalene and ethylnaphthalene.

The organosulfur compounds present in the FCC gasoline may be as defined above for those that may be present in the composition employed in the process of the invention. For instance, they may be one or more C₄₋₁₀ organosulfur compounds. In particular, the gasoline may comprise one or more organosulfur compounds comprising a thiophene ring, a benzothiophene ring or a dibenzothiophene ring. For instance, the organosulfur compounds may be one or more compounds selected from substituted or unsubstituted thiophene, substituted or unsubstituted benzothiophene, and substituted or unsubstituted dibenzothiophene. Typically, if the organosulfur compound is substituted, it is substituted with one or more C₁₋₆ alkyl groups.

The present invention is further illustrated in the Example which follows.

### EXAMPLE

The inventors' previous research concerned an extractive purification process in which the solvent methanol, and the solvent mixture methanol and ethylene glycol, showed excellent olefin reduction and desulfurization of Model FCC Gasoline Mixture (MFGM) and commercial FCC gasoline (CFG). This extractive purification process produces two phases of products. One phase is a clean/ultra clean FCC gasoline which can be considered to be the final commercial product. The other phase is the extractant phase containing the solvent (methanol, and optionally ethylene glycol) and extracted olefins, paraffins, aromatics and OSCs.

The extractant phase can be fed into a reactor and converted into more valuable hydrocarbon products (e.g. aromatics) through a catalytic, methanol-to-hydrocarbon process such as a methanol-to-aromatics (MTA) process. Due to the existence in the second phase product of olefins, paraffins, aromatics and, when present, the co-extractant ethylene glycol, the yield of useful hydrocarbons (e.g. aromatics) is higher than in a pure methanol methanol-to-hydrocarbon (e.g. MTA) process under the same operation conditions (reaction time, WHSV, temperature and pressure) and using the same catalyst (e.g. H-ZSM-5). Also, since hydrogen is produced by the catalytic process, the OSCs in the feed can usefully be removed by hydrodesulfurization (HDS), in which the hydrogen produced reacts with the sulfur in the OSCs to produce H₂S.

In this Example, the inventors examined the co-feeding effect of olefin, paraffin, aromatics, co-extractant (ethylene glycol) and OSCs (thiophene) with methanol during the MTA process. Then, in order to investigate practical aspects of the after-extraction catalytic conversion process, and find the most suitable reaction temperature, the inventors also tested the MFGM after extraction lower phase's conversion process under different operation temperatures with HZSM-5. Remarkable results were obtained through this series of experiments.

### Experimental

1-hexene was purchased from Acros Organics Company with purity of 97.0% (impurities include i,n-pentane, i,n-hexane, 2-pentene, 2,3-hexene). N-octane with purity of 99.0%, p-xylene with purity of 99.0%, methanol with purity of 99.9%, ethylene glycol with purity of 99.5% and n-heptane with purity of 99.0% were purchased from Sigma Aldrich Company. These agents were used without further purification. H-ZSM-5 with an Si/Al ratio of 60 had been chosen as the catalyst used in the after extraction conversion process, and this catalyst was purchased from ZEOLYST international Company.

### Co-feeding effect: sample preparation

In order to study the co-feeding effect in the MTA process, methanol was mixed with various hydrocarbons under different mass fractions. All these samples are listed in Table 1.

**Table 1. Composition of each co-feeding test sample**

| **Group** | **Contents** | **Mass Fraction (wt)** |
|---|---|---|
| **methanol with olefin mixtures** | methanol+1-hexene | 95.0%+5.0% |
| | methanol+1-hexene | 90.0%+10.0% |
| | methanol+1-hexene | 80.0%+20.0% |
| **methanol with paraffin mixtures** | methanol+n-octane | 95.0%+5.0% |
| | methanol+n-octane | 90.0%+10.0% |
| | methanol+n-octane | 85.0%+15.0% |
| **methanol with aromatics mixtures** | methanol+p-xylene | 95.0%+5.0% |
| | methanol+p-xylene | 90.0%+10.0% |
| | methanol+p-xylene | 80.0%+20.0% |
| **methanol with co-solvent mixtures** | methanol+ ethylene glycol | 95.0%+5.0% |
| | methanol+ ethylene glycol | 90.0%+10.0% |
| | methanol+ ethylene glycol | 80.0%+20.0% |
| **methanol with oscs mixtures** | methanol+thiophene | 99.9%+1000 ppm (0.1%) |
| | methanol+thiophene | 99.8%+2000 ppm (0.2%) |
| | methanol+thiophene | 99.6%+4000 ppm (0.4%) |

### Model FCC Gasoline Mixture (MFGM) and extractant preparation

For preparation of the MFGM the existing literature was referred to, which illustrated the required composition of FCC gasoline. In the FCC gasoline, the major part of the olefin fraction consists of C5 to C8 olefins (W. Kiatkittipong, S. Wongsakulphasatch, N. Tintan, N. Laosiripojana, P. Praserthdam, S. Assabumrungrat, Fuel Processing Technology 2011, 92, 1999-2004; Z. Rusong, G. Junbin, Z. Juanjuan, Petrochemical Technology 2009, 3, 009) while C6 olefins contribute more to the olefin fraction (N. Viswanadham, B. Negi, M. Garg, M. Sundaram, B. Sairam, A. Agarwal, Fuel 2007, 86, 1290-1297). Therefore, C6 olefin 1-hexene was chosen as the model, target olefin used in this work. Its fraction in the MFGM was equal to the total fraction of C5 and C6 olefins. Moreover, due to the fact that C8 aromatics are the prevailing mass fraction among all the aromatics in the FCC gasoline (Z. Rusong, G. Junbin, Z. Juanjuan, Petrochemical Technology 2009, 3, 009) p-xylene was chosen as the model aromatic. The abundance of each compound in the MFGM was based on a commercial FCC gasoline, Daqing FCC gasoline (Z. Rusong, G. Junbin, Z. Juanjuan, Petrochemical Technology 2009, 3, 009). The group composition is listed in the Table 2. From the table, the mass fraction of C5, C6 olefins and C8 aromatics are 5.65%, 11.83% and 7.51%, respectively.

**Table 2. Group composition of Daqing fluid catalytic cracking (FCC) gasoline**

| **Carbon Number** | **Composition (Wt) %** | | | | |
|---|---|---|---|---|---|
| | n-Paraffins | i-Paraffins | Olefins | Naphthene | Aromatics |
| **3** | 0.11 | 0.00 | 0.10 | 0.00 | 0.00 |
| **4** | 0.21 | 0.00 | 1.09 | 0.00 | 0.00 |
| **5** | 0.46 | 2.68 | 5.65 | 0.53 | 0.00 |
| **6** | 0.98 | 0.80 | 11.83 | 1.33 | 0.60 |
| **7** | 1.16 | 5.26 | 9.40 | 2.27 | 0.29 |
| **8** | 1.27 | 6.08 | 9.71 | 1.35 | 7.51 |
| **9** | 0.57 | 3.92 | 3.54 | 1.25 | 7.01 |
| **10** | 0.42 | 1.49 | 1.71 | 0.00 | 1.31 |
| **11** | 0.00 | 4.36 | 2.20 | 0.00 | 0.23 |
| **12** | 0.00 | 1.30 | 0.00 | 0.00 | 0.00 |
| **Total** | 5.18 | 25.89 | 45.23 | 6.73 | 16.95 |

Furthermore, based on the literature survey, the most important class of sulfur compounds present in FCC gasoline is thiophene and its light alkyl derivatives in addition to benzothiophene (T. G. Albro, P. A. Dreifuss, R. F. Wormsbecher, Journal of High Resolution Chromatography 1993, 16, 13-17; W.-C. Cheng, G. Kim, A. Peters, X. Zhao, K. Rajagopalan, M. Ziebarth, C. Pereira, Catalysis Reviews 1998, 40, 39-79; U. Alkemade, T. Dougan, M. Absi-Halabi, J. Beshara, H. Qabazard, A. Stanislaus, et al 1996). Thus, thiophene was chosen as the target sulfur-compound of this study, which has the most contribution to FCC gasoline's sulfur-content. The general mass fraction of OSCs in FCC gasoline is approximately 1000 ppm (0.1%) (L. Lin, G. Wang, H. Qu, J. Yang, Y. Wang, D. Shi, Y. Kong, Journal of Membrane Science 2006, 280, 651-658; L. Lin, Y. Kong, G. Wang, H. Qu, J. Yang, D. Shi, Journal of Membrane Science 2006, 285, 144-151; H.-m. QU, Y. KONG, Acta Petrolei Sinica (Petroleum Processing Section) 2008, 2). Thus, to represent all the other OSCs in FCC gasoline, the mass fraction of thiophene in the MFGM was set at 0.1%.

For the purpose of optimizing the experimental procedure, in the MFGM, the mass fraction of C6 olefins (1-hexene), C8 aromatics (p-xylene) and OSCs (thiophene) were set as 18.0%, 8.0% and 0.1%, respectively. All the other components were balanced with n-octane, whose mass fraction is 73.9%.

Based on the inventors' previous research, methanol (75%, wt) with ethylene glycol (25%, wt) presented the best purification performance and was therefore chosen as the extractant mixture in this study.

### Extraction and separation process

The extraction experiment involved careful mixing and separation methods. Sufficient MFGM sample and extractant mixture were prepared based on the MFGM and extractant preparation described above. After mixing under 1:1 extraction (mass) ratio and complete phase separation, the resultant mixture were separated and analysed. Two liquid phases were observed, which are referred to in this Example as the "Upper Phase" (less dense) and "Lower Phase" (more dense) based on their vertical order in the separation funnel.

The solution of extractant methanol with the resulting extracted compounds are located in the Lower Phase of the samples, because methanol has a higher density than the alkane and olefins, as shown in Table 3.

**Table 3. The density of each component**

| Component | n-octane | 1-hexene | thiophene | p-xylene | methanol | ethylene glycol |
|---|---|---|---|---|---|---|
| Density (g/cm³) | 0.703 | 0.673 | 1.051 | 0.861 | 0.792 | 1.11 |

Following the extraction, Gas Chromatography-Mass Spectrometry (GCMS) method was employed to quantify the level of various contents in the Upper and Lower Phase. Thereupon, both phases of resultant mixture were measured. The GCMS analyser was a SHIMADZU GCMS-QP2010 SE gas chromatography mass spectrometer. The main operating parameters of GCMS analyser were: Column Oven Temperature 35°C/308K; Injection Temperature 205°C/478 K; Injection Mode direct; Temperature rising rate from 35 to 40°C was 1°C/min, and after 40°C the rate was changed to 10°C/min, until it reached 180°C/453 K.

### Conversion/reaction process

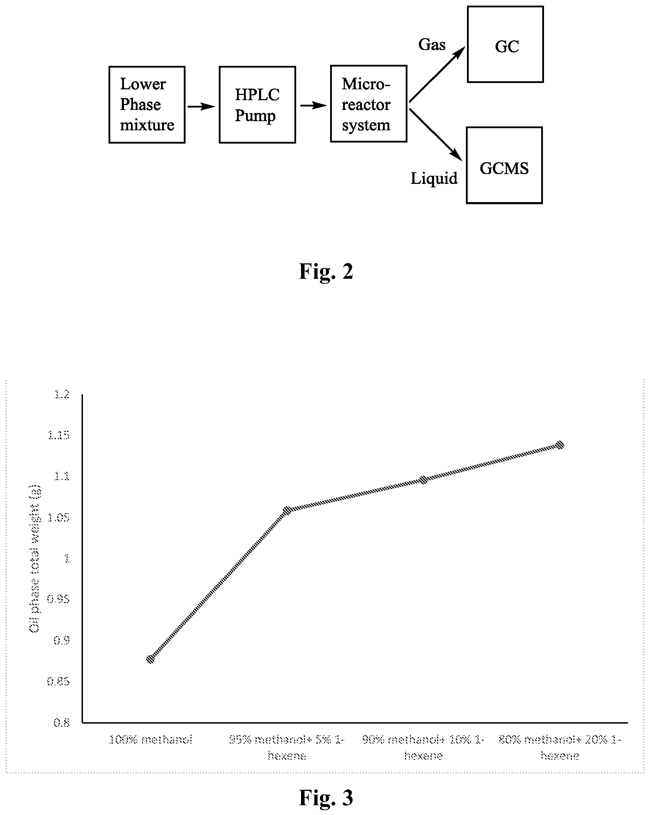

A Fixed bed microreactor system was applied in the after extraction conversion process, and the structure of the whole process including the analysis equipment (GC and GCMS) is illustrated schematically in Fig. 2. In this process, as the raw material, co-feeding mixture samples or the Lower Phase of the MFGM after extraction mixture was pumped into the microreactor by a HPLC pump. The pumping flow rate of these mixtures into the reactor was 2g/hour. The carrier gas of the conversion process was nitrogen and its flow rate had been set to 20ml/min. During the reaction preparation of each test, 1 gram of H-ZSM-5 catalyst was added into the reactor tube with the carborundum sand and quartz wool which can prevent the catalyst blowing away from the reactor tube by the carrier gas. Based on the parameters of the conversion process above, the weight hour space velocity (WHSV) of the system was estimated to be 2 hour⁻¹. Moreover, the operation conditions for the co-feeding effect tests were kept at 400°C and under atmosphere pressure. For the four MFGM after extraction lower phase's conversion process tests the reaction temperatures were set as 400°C, 350°C, 300°C, respectively. The reaction pressure was also under atmospheric pressure for these four tests. The reaction time for all the tests was 6 hours.

The SHIMADZU GC2014 gas chromatography (GC) spectrometer was linked with the gas outlet of the microreactor to online analyse the gaseous product from the conversion process. The gaseous product was injected into the GC analyser per hour during the conversion process. The main operating parameters of GC meter were: Column Oven Temperature 45°C; Injection Temperature 300°C; At 45°Csystem held 4 minutes, then temperature rising rate from 45 to 200°C was 50°C/min, and after 200°C system held for another 7.8 minutes, the temperature rising rate was changed to 10°C/min, until it reached 300°C.

When each reaction finished, the liquid product was collected from the liquid outlet of the microreactor. Two phases were observed in the liquid product, the Oil Phase at the top and Water Phase at the bottom. These two phases were separated and the volume and weight of the Oil Phase was measured. Then, the Oil Phase was sent to the GCMS analyser to quantify the target aromatics in it. The main operating parameters of GCMS analyser were: Column Oven Temperature 35°C/308K; Injection Temperature 205°C/478 K; Injection Mode direct; Temperature rising rate from 35 to 40°C was 1°C/min, and after 40°C the rate was changed to 10°C/min, until it reached 180°C/453 K.

### Results and discussions

### Co-feeding effect

With the advantages of thermoneutral and low energy consumption, the improvement of hydrocarbon cracking, the reduction of coke disposition, the high yield and selectivity, and the simplification of reactor design (T. Gong, X. Zhang, T. Bai, Q. Zhang, L. Tao, M. Qi, C. Duan, L. Zhang, Industrial & Engineering Chemistry Research 2012, 51, 13589-13598; B. Lücke, A. Martin, H. Günschel, S. Nowak, Microporous and mesoporous materials 1999, 29, 145-157; D. Mier, A. T. Aguayo, A. G. Gayubo, M. Olazar, J. Bilbao, Applied Catalysis A: General 2010, 383, 202-210; D. Mier, A. T. Aguayo, A. G. Gayubo, M. Olazar, J. Bilbao, Chemical Engineering Journal 2010, 160, 760-769; Z. Wang, G. Jiang, Z. Zhao, X. Feng, A. Duan, J. Liu, C. Xu, J. Gao, Energy & Fuels 2009, 24, 758-763) the co-feeding methanol conversion was introduced as the inventors' core process and co-feeding conversion effect of methanol with various hydrocarbons was investigated.

### Olefin co-feeding effect

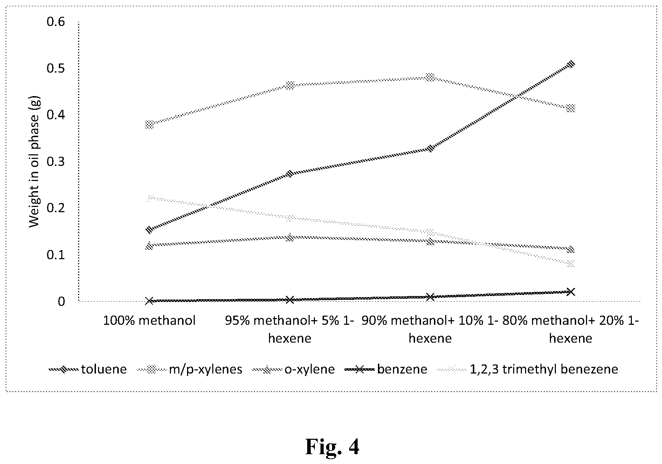

First of all, the co-feeding effect of olefin in the methanol-to-aromatics catalytic conversion (MTA) process was examined. In this series of tests, 1-hexene was chosen as the co-feeding raw material. The total or various compound's yield of liquid oil phase product from the olefin co-feeding tests with different methanol and 1-hexene mass fraction are presented in Figs. 3 and 4, respectively.

From Fig. 3 a fairly clear and positive correlation between the 1-hexene's mass fraction in the methanol-olefin mixture (feed stream) and the total weight of the oil phase product is obtained. That means the oil phase yield can be promoted by the added olefin (1-hexene). With the raw material of 80% methanol and 20% 1-hexene, the oil phase yield has been improved nearly 30% (29.8%) compared with pure methanol's MTA conversion.

Then, through the GCMS analysis results of the oil phase products (Fig. 4), it indicates the output of toluene is raising with the increasing percentage of 1-hexene in the feed stream. m/p-xylene's yield shows a slight increasing trend with 0∼10% of 1-hexene addition. This yield decreases when the conversion process apply 80% methanol with 20% 1-hexene, however it is still higher than the pure methanol conversion. The yield of o-xylene and benzene not present a very obvious change in these tests. 1,2,3-trimethyl benzene's yield shows a slight negative correlation with the increasing fraction of 1-hexene. According to these results, the aromatics yield of the MTA process is clearly promoted by the added olefin (1-hexene).

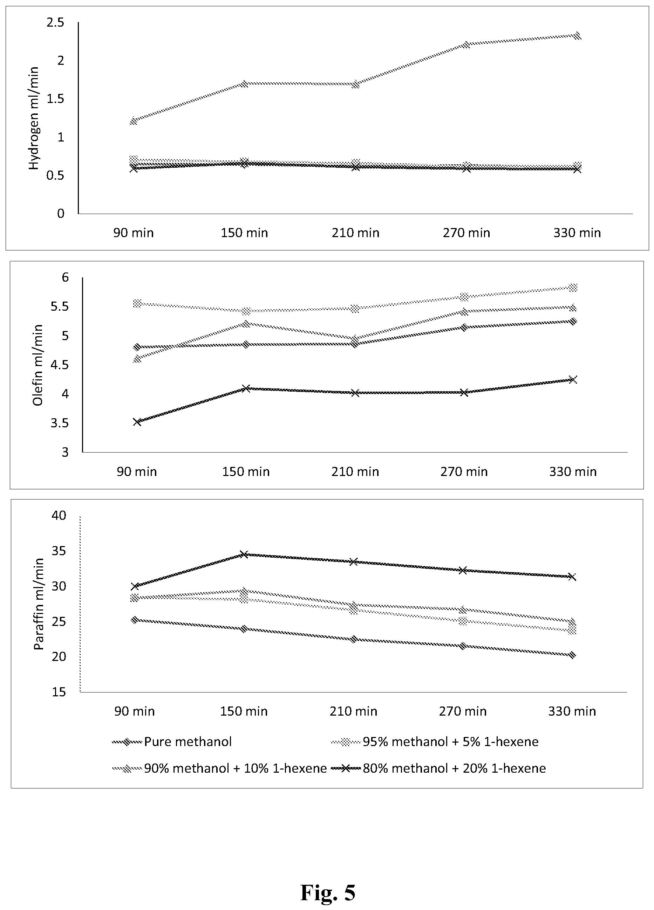

Moreover, the time-on-stream gaseous products' output rate are displayed in Fig. 5. These results are obtained from the GC analysis.

Compared with other situations, the hydrogen output rate gets an obvious increase when the process applies 90% methanol and 10% 1-hexene as the raw material. On the other hand, the output rate of gaseous olefins is promoted by the added low concentration of 1-hexene, when the 1-hexene's fraction reaches 10∼20%, the production of gaseous olefin is reduced. However, the gaseous paraffin's output shows a positive correlation with the increasing 1-hexene fraction. Therefore, the gaseous product analysis results indicate that, during the MTA process the co-feeding olefin (1-hexene) also promotes the output of gases.

### Paraffin co-feeding effect

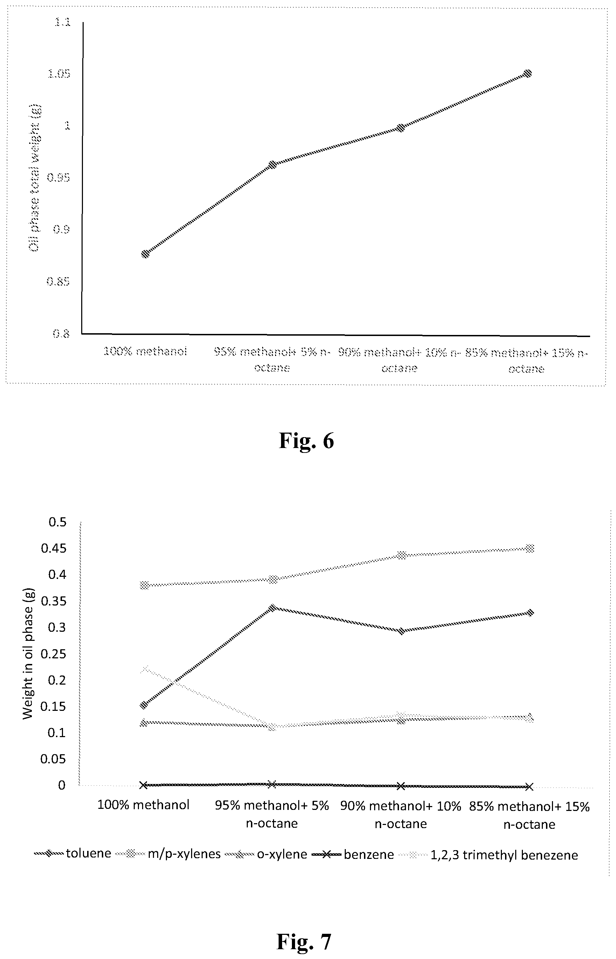

In order to examine the paraffin's co-feeding n-octane was mixed with methanol at 5%, 10% and 15% mass fraction. Then, through the catalytic conversion process different yields of the oil phase product were obtained from these mixtures. The total yield showed in Fig. 6, and individual compound's yield showed in Fig. 7.

The total yield of the oil phase product shows an obvious positive correlation with the increasing fraction of n-octane in the feed stream. A 20% improvement of the total yield can be achieved upon applying 85% methanol and 15% n-octane as the raw material instead of pure methanol.

The individual compound's yield shows positive results. As the olefin co-feeding case, toluene's yield is improved. The yield of the most valuable m/p-xylene also indicates positive correlation with more n-octane in the feed stream. 1,2,3-trimethyl benzene's yield decreases slightly when n-octane is introduced into the conversion process, however, with the increasing of the n-octane's fraction there not show an very obvious change in the 1,2,3 trimethyl benzene's yield. Whilst, compared with pure methanol's conversion, the yield of o-xylene and benzene not present a significant change. Thus, it can also be concluded that, the aromatics yield of the conventional MTA process is clearly promoted by the added paraffin (n-octane).

From the gaseous product's analysis results it can be seen that the output rate of hydrogen increased with the larger fraction of n-octane in the raw material. That can be explained by the dehydrogenation is promoted by the added n-octane, which is easier dehydrogenated than the methanol. Although the gaseous paraffin's output rate is promoted by the added n-octane, the olefin's output rate is slightly restrained. In general, during the MTA process the output rate of gaseous product is undisputedly improved by the added paraffin.

### Aromatics co-feeding effect

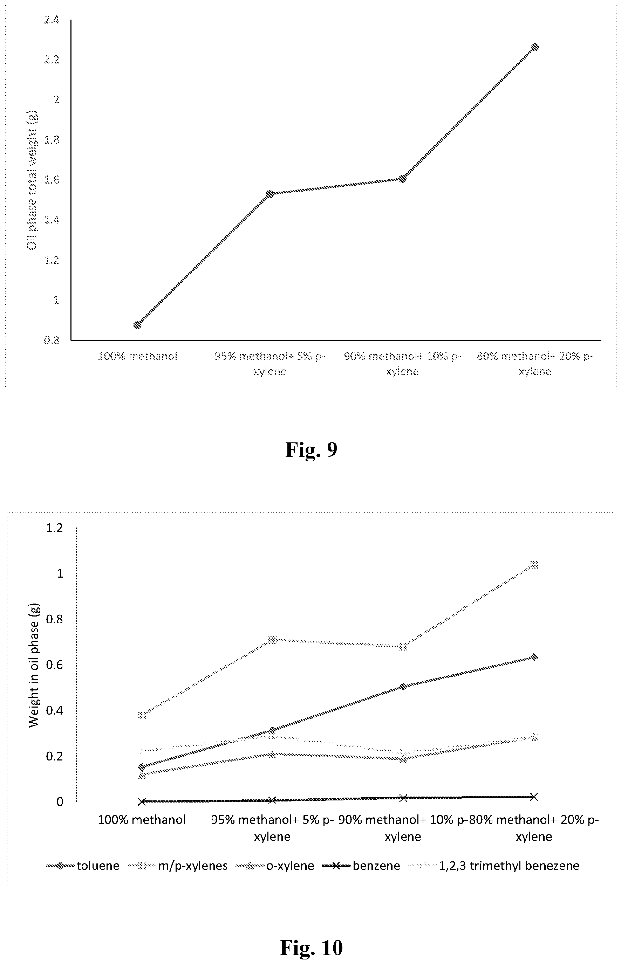

In the tests of this effect p-xylene was chosen as the co-feeding raw material. It was mixed with methanol at 5%, 10% and 20% mass fraction. After the catalytic conversion process different yields of the oil phase product from these mixtures were observed. The total yield is shown in Fig. 9, and the individual compounds' yields are shown in Fig. 10.

Again, the oil phase product's total yield presents a very clear positive correlation with the increasing fraction of aromatics in the feed stream. With 20% of p-xylene and 80% of methanol in the feed stream nearly 160% improvement in the total yield than the pure methanol through the MTA conversion process was achieved.

Look into the compound's yield, toluene and m/p-xylene shows obvious increasing trend when more p-xylene was blended into methanol as the raw material. Other compounds' yield such as o-xylene and benzene are also increased slightly with larger quantity of p-xylene in the feed stream. Compare with pure methanol process, p-xylene co-feeding's yield of 1,2,3-trimethyl benzene does not show an obvious difference. Therefore, we can also confirm the promotion effect of the aromatics in their co-feeding MTA process.

In contrast to the oil phase yield, the gaseous products' output rates did not indicate obvious promotion by co-feeding p-xylene. Except 95% methanol + 5% p-xylene, raw materials with other mixing ratio present reduced hydrogen output rate. Output rate of the gaseous olefin even shows negative correlation with the fraction of added p-xylene. For the gaseous paraffin output rate, 95% methanol + 5% p-xylene shows lower rate than the pure methanol, methanol with 10% and 20% of p-xylene get higher paraffin output rate. Nonetheless, aromatics are our target product and their yields are clearly promoted by the co-feeding aromatic (p-xylene).

### Ethylene glycol co-feeding effect

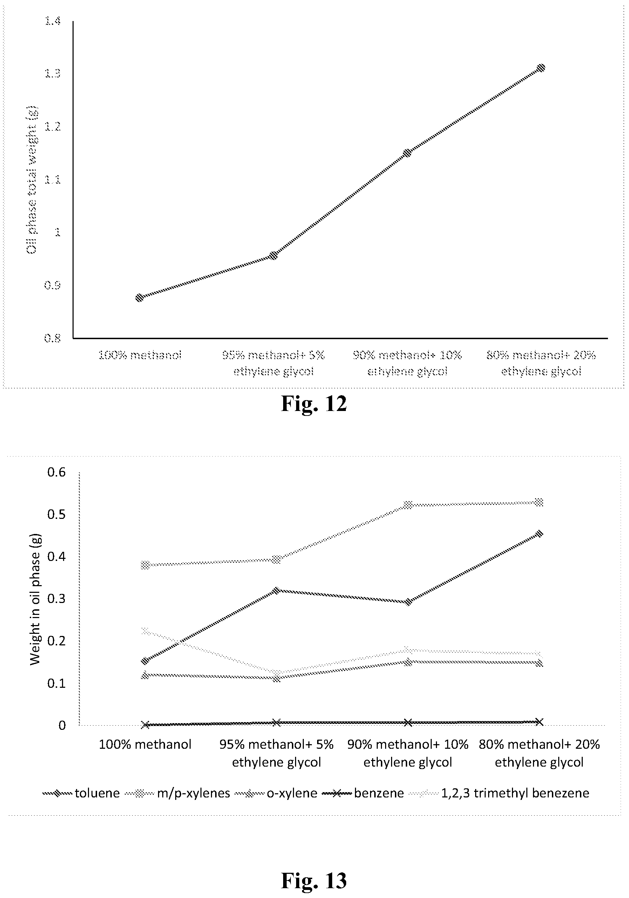

Ethylene glycol is the co-extractant in the inventors' preferred primary extraction process. Therefore, in these tests, ethylene glycol was blended with methanol at 5%, 10% and 20% mass fraction. The total yield of the oil phase product from these mixtures after the catalytic conversion process is displayed in Fig. 12, and individual compound's yield is displayed in Fig. 13.

Fig. 12 indicates that the oil phase's total yield has a clear positive correlation with the mass fraction of the co-extractant ethylene glycol. With 20% of ethylene glycol and 80% of methanol in the raw material stream, the conversion process obtained nearly 50% more total oil phase product than the pure methanol MTA process.

Toluene and m/p-xylene's yield also present a clear positive correlation with the added ethylene glycol. Similar to the paraffin and aromatics tests, with the increasing amount of the added ethylene glycol the yield of o-xylene and benzene not present a significant change. On the other hand, the yield of 1,2,3-trimethyl benzene dropped a little bit when more ethylene glycol existed in the feed stream.

Through the on-line GC analysis, the hydrogen output rate was found to only increase by using 80% methanol + 20% ethylene glycol as the feed stream, otherwise, only a lower hydrogen output rate was achieved than with pure methanol conversion. Gaseous olefin's output rate was restrained by the added ethylene glycol, but higher ethylene glycol ratio still achieved higher olefin output. 95% methanol + 5% ethylene glycol obtained highest paraffin output rate, with 20% of ethylene glycol and 80% of methanol in the raw material stream the paraffin's output rate is lower than pure methanol conversion. To sum up, although with restrained gaseous output rate, the co-feeding ethylene glycol still promoted the MTA process very well.

### Co-feeding effect mechanism

The underpinning mechanism of the promotion effect of the co-feeding olefin, paraffin, aromatics and co-extractant (ethylene glycol) can be explained by the conversion mechanism of methanol. In the case of H-ZSM-5, a conversion mechanism involving methylation and subsequent cracking of higher alkenes is proposed in parallel with the aromatic-based hydrocarbon pool mechanism, i.e. the dual-cycle mechanism shown in Fig. 1 (U. Olsbye, S. Svelle, M. Bjørgen, P. Beato, T. V. Janssens, F. Joensen, S. Bordiga, K. P. Lillerud, Angewandte Chemie International Edition 2012, 51, 5810-5831; X. Wang, W. Dai, G. Wu, L. Li, N. Guan, M. Hunger, Catalysis Science & Technology 2014).

Through this mechanism it can be found, when the olefin, paraffin, aromatics and ethylene glycol are blended with methanol and come into contact with the catalyst in the reactor, all these co-feeding hydrocarbons act as the extra intermediates of the conversion process. The added olefin and paraffin support the first (left) conversion cycle of the dual-cycle, added aromatics supports the second (right) conversion cycle, and ethylene glycol supports both cycles. Ethylene glycol provides more basic material (2CH₂OH) than methanol (CH₃OH). Whilst, the formation of the higher alkenes will be promoted by the added olefin and paraffin, and added aromatics increases the yield of aromatics from conversion. Thus, more aromatics are formed by the increasing amount of these higher alkenes. As the final results show, the total yield of the aromatics is improved by these added co-feeding raw materials.

### Organosulfur compounds (OSCs) effect

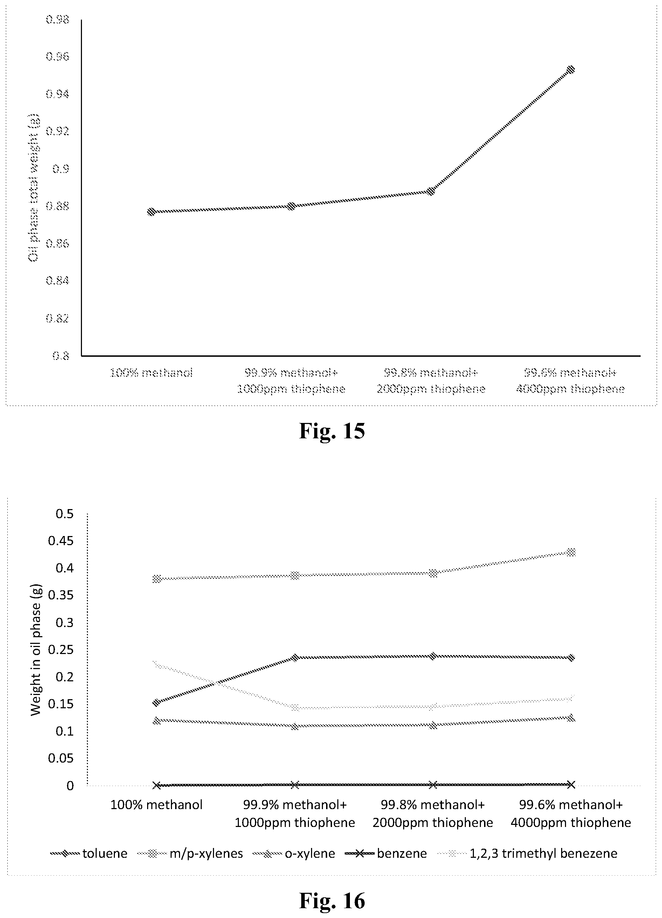

As described previously, OSCs such as mercaptans, thiophenes, etc., present in the feed stream may deactivate the catalyst (S. Bhatia, J. Beltramini, D. Do, Catalysis Reviews-Science and Engineering 1989, 31, 431-480). Therefore, in order to investigate the OSCs effect in the MTA conversion process, thiophene was blended into the methanol feed stream at the concentrations of 1000, 2000 and 4000 ppm by weight. The oil phase total yield is shown in Fig. 15, and the individual compounds' yields are shown in Fig. 16.

The results of the oil phase total yield indicate that, the addition of the thiophene in the feed stream did not reduce the oil phase yield. Oppositely, the yield showed positive correlation with the concentration of thiophene in the raw material. With 4000 ppm thiophene, the conversion process achieves 9% increase in the total yield of the oil phase.

Toluene and m/p-xylene's yield increased slightly with higher concentration of thiophene. Meanwhile, o-xylene and benzene did not show an obvious change. The only compound's yield that was reduced in the OSCs effect tests was 1,2,3-trimethyl benzene, but the reduced ratio is minor. Hence, it can be concluded that the OSC content (thiophene) in the feed stock did not reduce the total yield of aromatics but rather the oil phase yield was increased.

From the on-line GC analysis results, the output rate of hydrogen was found to be decreased by the added thiophene in the feed stream. This observation can be explained by the HDS process, which can be defined as a by-process of the OSCs added MTA conversion process. Hydrogen is one of the major gaseous products from the methanol conversion process. With an acidic zeolite catalyst such as H-ZSM-5, the OSCs (thiophene) in the feedstock reacted with this hydrogen and formed H₂S (E. Kowsari, Recent Advances in the Science and Technology of Desulfurization of Diesel Fuel Using Ionic Liquids. Editor, 2013). Therefore, this by-reaction consumes the hydrogen produced by the methanol conversion process. As the result, the hydrogen output rate is reduced when OSCs (thiophene) has been added into the feedstock. Based on these results, it can be seen that the inventors' after extraction conversion process is able to remove the OSCs in the feed stock through the HDS by-process over a solid acid catalyst.

On the other hand, olefin's output rate is restrained by the added thiophene, and a negative correlation between the concentration of the thiophene and gaseous olefin's output was observed. Paraffin's output rate is reduced with the feed stock contain 1000 ppm thiophene. However, with higher thiophene concentration, the process achieves higher gaseous paraffin output rate. Moreover, when the OSCs (thiophene) added into the feed stock the catalyst's deactivation rate not become quicker than the pure methanol conversion process. Thus, through analyzing the liquid and gaseous product, it can be concluded that a low concentration of OSCs (thiophene) does not negatively influence the total aromatics yield and does not influence the deactivation rate of the catalyst during the MTA process.

### Extraction and after extraction conversion process

Through the above co-feeding tests the promotion effect and promotion mechanism of the olefin, paraffin, aromatics and co-extractant ethylene glycol have been confirmed and explained, respectively. The OSCs effect in the methanol conversion has also been investigated, and no negative influence by the added thiophene was found. Ideally, the added OSCs (thiophene) are removed by the HDS process of the MTA process. Therefore, based on these theoretical and practical supports it is proposed that we better total aromatics yield than the pure methanol can be achieved when the MFGM's after extraction Lower Phase mixture is employed as the feed stock in the MTA conversion process. The investigation results are described in the following part of the Example.

In this test, 25% wt. ethylene glycol was mixed with 75% wt. methanol at first. Secondly, this mixture was used as the extractant to deal with the MFGM during the extraction process. GCMS was introduced to analyze the Upper and Lower Phase mixture from the MFGM's extraction process. The results indicate that all the OSCs (thiophene) content was successfully removed from the MFGM, and the mass fraction of olefin (1-hexene) and aromatics (p-xylene) were reduced by the extraction process. From this novel extractive purification process two products are obtained. They are the clean/ultra clean FCC gasoline (MFGM) at the Upper Phase of the after extraction mixture and next catalytic conversion process's raw material at the Lower Phase of the after extraction mixture. Table 4 lists the mass fraction of each compounds in the after extraction Lower Phase mixture of MFGM.

**Table 4. Composition of MFGM's after extraction Lower Phase mixture.**

| | methanol | 1-hexene | thiophene | Ethylene glycol | n-octane | p-xylene |
|---|---|---|---|---|---|---|
| wt (%) | 60.4 | 11.0 | 900ppm | 22.0 | 5.2 | 1.4 |

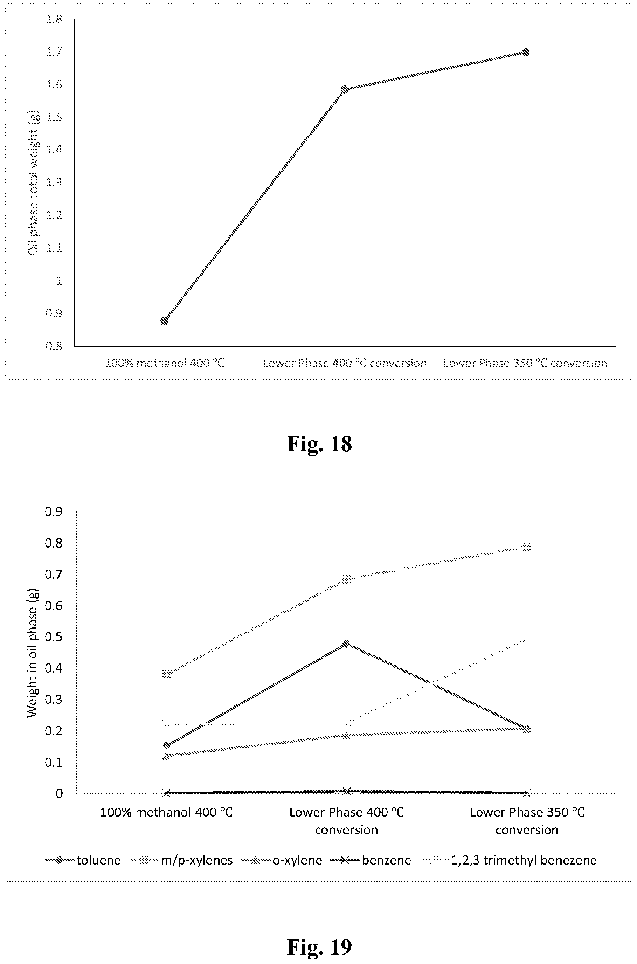

After the Upper and Lower Phase mixtures were carefully separated, the Lower Phase mixture was pumped into the reactor to proceed the catalytic conversion (MTA) process as the following step. For the aim of find the most suitable conversion conditions this process was examined at 400°C, 350°C, 300°C, respectively. The total yields of the oil phase product from the catalytic conversion process at different temperature are displayed in Fig. 18, and the individual compounds' yields are displayed in Fig. 19.

From the total oil phase yield presented in Fig. 18, a rapid increasing trend is observed between pure methanol and after extraction Lower Phase conversion process's results. That means, during the same condition conversion process, with the application of extraction Lower Phase mixture, the total oil phase yield of the pure methanol MTA process was improved by nearly 81%. Even higher oil phase yield was achieved in the after extraction conversion process when the reaction temperature was equal to 350°C. Compared with pure methanol process a 94% improvement of the total yield of oil phase was obtained at this temperature.

Moreover, the analysis of individual compound yields shows the high added value m/p-xylene's yield is improved by 80% by the MFGM's after extraction conversion process. More surprisingly, when the reaction temperature increased to 350°C this improvement reaches 108%. At 350°C, the high value product yields, e.g. o-xylene and 1,2,3-trimethyl benzene, are increased. Thus, an improvement in the total aromatics yield from the MTA process has clearly been demonstrated, as is evident from the oil phase analysis.

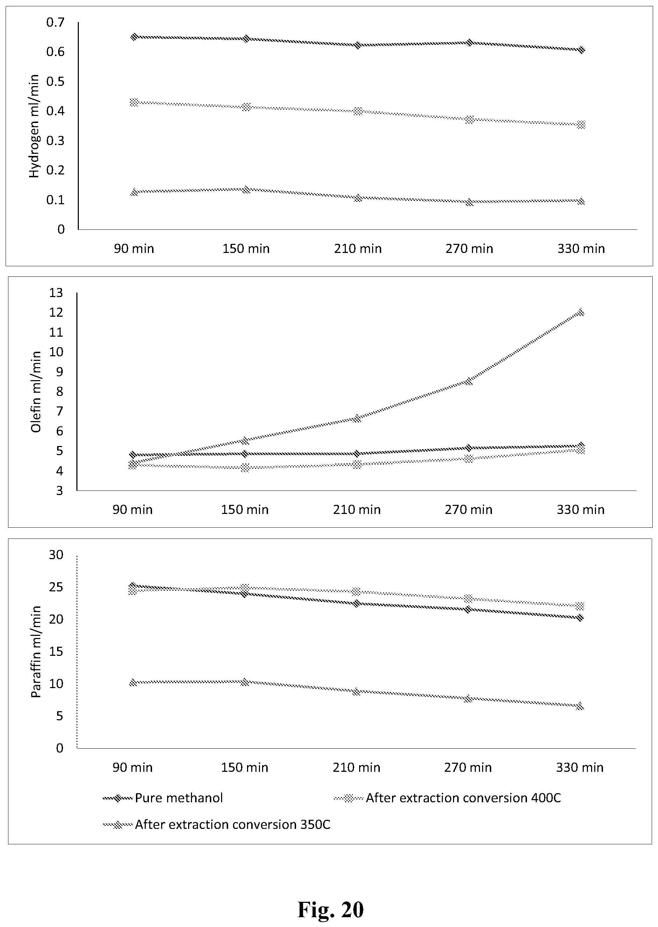

Gaseous product output rate is shown in Fig. 20. Hydrogen output rate decreased when applied MFGM's after extraction Lower Phase mixture was employed as the feedstock. This observation can be explained by the fact that HDS of the OSCs (thiophene) occurs in the Lower Phase mixture. The output of gaseous olefin reached its highest rate when the after extraction conversion process proceeded at a reaction temperature of 350°C, and at this temperature the lower added value gaseous paraffin output rate is reduced. Based on the very positive results above, the imporements provided by the inventors' novel after extraction conversion process are clear.

### Conclusions

In this Example, the co-feeding effect of olefin (1-hexene), paraffin (n-octane), aromatics (p-xylene), co-extractant (ethylene glycol) and OSCs (thiophene) were investigated in the methanol-to-aromatics (MTA) process. All the additives' mass fractions correlate positively with the total aromatics yield, even the OSC (thiophene) content. Moreover, the OSC content in the feedstock can successfully be removed or reduced by the HDS "by-process". Based on these results the inventors propose that better total aromatics yields can be achieved when the MFGM's after extraction Lower Phase mixture is employed as the feed stock in the MTA conversion process instead of pure methanol. The after extraction conversion tests undoubtedly showed very positive results. At a reaction temperature of 350°C, the total aromatics yield achieved an increase of 94%, and the high added value m/p-xylene yield was improved by nearly 108%. Meanwhile, the OSC content in the feedstock was successfully removed through this process. Furthermore, there are many advantages of this process for industry. In the primary extraction process, the co-extractant (ethylene glycol) is mixed with methanol at first. Secondly, this mixture is used as the extractant to deal with the FCC gasoline in the contact tower system during the extraction process. Clean/ultra clean FCC gasoline and after extraction Lower Phase mixture are obtained as the two major products from this process with very low energy consumption. Then, Lower Phase mixture after extraction is applied as the raw material for the next stage's catalytic conversion process. Through the similar process of the MTA conversion, high added value aromatics can be obtained with more efficient conversion and better selectivity than the conventional pure methanol MTA process. Whilst the OSC content in the feed stock can be effectively removed during the inventors' process, the total energy consumption and capital cost of the whole process also can be significantly reduced. To sum up, this process can achieve much better performance than conventional MTA processes and can provide the advantages of thermoneutral and low energy consumption, improved hydrocarbon cracking, reduced coke deposition, high yield and selectivity, and simplification of reactor design.

## Claims

1. A process for producing one or more hydrocarbons from methanol, which process comprises contacting a composition which comprises methanol, at least one alkene and at least one organosulfur compound, with a solid acid catalyst.

2. A process according to claim 1 wherein the composition further comprises at least one aromatic hydrocarbon compound or at least one alkane.

3. A process according to claim 1 wherein the composition further comprises at least one aromatic hydrocarbon compound and at least one alkane or cycloalkane,
optionally wherein the composition comprises the at least one alkene in an amount of from 0.01 wt % to 20 wt %, the at least one organosulfur compound in an amount of from 0.001 wt % to 1.0 wt %, the at least one aromatic hydrocarbon compound in an amount of from 0.01 wt % to 15 wt %, the at least one alkane or cycloalkane in an amount of from 0.01 wt % to 15 wt %, and the methanol in an amount of at least 49 wt %.

4. A process according to any one of the preceding claims wherein the composition comprises the at least one organosulfur compound in an amount equal to or greater than 0.001 % (10 ppm) by weight.

5. A process according to any one of the preceding claims wherein the composition further comprises a second polar organic solvent which is other than methanol, optionally wherein the second polar organic solvent is an alcohol other than methanol, optionally wherein the alcohol other than methanol is a polyhydric alcohol, preferably a dihydric alcohol, and more preferably ethylene glycol.

6. A process according to any one of claims 1 to 4 wherein the composition further comprises at least one aromatic hydrocarbon compound, and at least one alkane or cycloalkane, and a second polar organic solvent as defined in claim 5,
optionally wherein the composition comprises the at least one alkene in an amount of from 0.01 wt % to 16 wt %, the at least one organosulfur compound in an amount of from 0.001 wt % to 1.0 wt %, the at least one aromatic hydrocarbon compound in an amount of from 0.01 wt % to 8 wt %, the at least one alkane or cycloalkane in an amount of from 0.01 wt % to 10 wt %, the methanol in an amount of at least 50 wt % and the second polar organic solvent in an amount of at least 15 wt %.

7. A process according to any one of the preceding claims wherein the solid acid catalyst comprises:
(a) an acidic zeolite, optionally wherein the acidic zeolite is H-ZSM-5, SAPO-34, H-Beta, H-Y, H-Mordenite or SBA;
(b) an acidic metal oxide or an acidic mixed metal oxide, optionally wherein the acidic metal oxide or the acidic mixed metal oxide comprises: ZnO, VOPO₄.2H₂O, ZrO₂/WO₃²⁻, ZrO₂/SO₄²⁻, Al₂O₃/PO₄³⁻, Al₂O₃/TiO₂/ZnO, Al₂O₃/ZrO₂/WO₃, or TiO₂/SO₄²⁻ ; or
(c) a solid heteropolyacid, optionally wherein the solid heteropolyacid comprises: CsₓHₓ-3PW₁₂O₄₀, H₃PW₁₂O₄₀.6H₂O, H₃PW₁₂O₄₀/K-10 clay, Ag_{0.5}H_{2.5}PW₁₂O₄₀, Zr_{0.7}H_{0.2}PW₁₂O₄₀, or H₃PW₁₂O₄₀/ZrO₂;
optionally wherein:
the solid acid catalyst comprises an acidic aluminosilicate zeolite or an acidic silicon aluminium phosphate (SAPO) zeolite;
the solid acid catalyst comprises an acidic aluminosilicate zeolite having the general formula (I):
[Mⁿ⁺]_{x/n}[(AlO₂⁻)ₓ(SiO₂)_{y}] (I)
wherein M is H⁺ or M is two or more different cations, one of which is H⁺; and the Si/Al ratio y/x is from 1 to 300; or
the solid acid catalyst is H-ZSM-5.

8. A process according to any one of the preceding claims wherein said contacting comprises contacting the composition with the solid acid catalyst at a temperature of greater than 200 °C, optionally at a temperature of greater than 320 °C or at a temperature of from 280 °C to 650 °C, and preferably at a temperature of from 325 °C to 500 °C, more preferably at a temperature of from 325 °C to 450 °C.

9. A process according to any one of the preceding claims wherein said contacting comprises: contacting the composition with the solid acid catalyst at a pressure of equal to or greater than 1 atm; and/or co-feeding the components of said composition over the solid acid catalyst, optionally at a weight hour space velocity of equal to or greater than 1 hr⁻¹.

10. A process according to claim 1 wherein:
the process is for producing one or more aromatic hydrocarbons from said methanol;
the composition further comprises at least one alkane and at least one aromatic hydrocarbon compound;
the solid acid catalyst comprises H-ZSM-5; and
said contacting comprises co-feeding the components in the composition over the solid acid catalyst at a weight hour space velocity of equal to or greater than 1 hr⁻¹, at a temperature of from 325 °C to 450 °C, and at a pressure of equal to or greater than 1 atm;
optionally wherein the composition comprises the at least one alkene in an amount of from 0.5 wt % to 20 wt %, the at least one organosulfur compound in an amount of from 0.001 wt % to 1.0 wt %, the at least one aromatic hydrocarbon compound in an amount of from 0.5 wt % to 15 wt %, the at least one alkane in an amount of from 0.5 wt % to 15 wt %, and the methanol in an amount of at least 49 wt %.

11. A process according to claim 1 wherein:
the process is for producing one or more aromatic hydrocarbons from said methanol;
the composition further comprises at least one alkane, at least one aromatic hydrocarbon compound, and ethylene glycol;
the solid acid catalyst comprises H-ZSM-5; and
said contacting comprises co-feeding the components in the composition over the solid acid catalyst at a weight hour space velocity of equal to or greater than 1 hr⁻¹, at a temperature of from 325 °C to 450 °C, and at a pressure of equal to or greater than 1 atm;
optionally wherein the composition comprises the at least one alkene in an amount of from 0.5 wt % to 16 wt %, the at least one organosulfur compound in an amount of from 0.001 wt % to 1.0 wt %, the at least one aromatic hydrocarbon compound in an amount of from 0.5 wt % to 8 wt %, the at least one alkane in an amount of from 0.5 wt % to 10 wt %, the methanol in an amount of at least 50 wt % and ethylene glycol in an amount of at least 15 wt %.

12. A process according any one of the preceding claims wherein:
the at least one alkene in the composition comprises one or more alkenes selected from C₄₋₁₂ alkenes and C₅₋₈ cycloalkenes, the at least one organosulfur compound in the composition comprises one or more C₄₋₁₂ organosulfur compounds, the at least one aromatic hydrocarbon compound in the composition, when present, comprises one or more C₆₋₁₂ aromatic hydrocarbons, the at least one alkane in the composition, when present, comprises one or more C₄₋₁₂ alkanes and the at least one cycloalkane in the composition, when present, comprises one or more C₅₋₈ cycloalkanes; or
the at least one alkene in the composition includes a C₆ alkene or a C₆ cycloalkene, the at least one aromatic hydrocarbon compound in the composition, when present, includes a C₈ aromatic hydrocarbon, the at least one alkane in the composition, when present, includes a C₈ alkane, and wherein the at least one organosulfur compound in the composition includes one or more compounds selected from substituted or unsubstituted thiophene, substituted or unsubstituted benzothiophene, and substituted or unsubstituted dibenzothiophene, optionally wherein when the organosulfur compound is substituted, it is substituted with from one to four C₁₋₆ alkyl groups.

13. A process according to any one of the preceding claims wherein the at least one alkene in the composition includes 1-hexene, the at least one aromatic hydrocarbon compound in the composition, when present, includes p-xylene, the at least one alkane in the composition, when present, includes n-octane, and the at least one organosulfur compound in the composition includes thiophene.

14. A process according to any one of the preceding claims which further comprises hydrodesulfurization of the least one organosulfur compound, optionally wherein said hydrodesulfurization of the least one organosulfur compound produces H₂S and one or more further hydrocarbons.

15. A process according to any one of the preceding claims which further comprises obtaining the composition by an extraction process comprising:
(a) contacting gasoline obtainable by a fluid catalytic cracking process, which gasoline comprises at least one alkene and at least one organosulfur compound, with an extraction solvent suitable for extracting alkenes and organosulfur compounds, which extraction solvent comprises said methanol and optionally a second polar organic solvent other than methanol, and thereby forming:
(i) a first phase comprising said extraction solvent which comprises said methanol, at least one extracted alkene, and at least one extracted organosulfur compound, and
(ii) a second phase comprising gasoline having a reduced alkene content and a reduced organosulfur content compared to said gasoline obtainable by a fluid catalytic cracking process,
and
(b) recovering at least part of the first phase for use as the composition;
optionally wherein: the gasoline obtainable by a fluid catalytic cracking process further comprises at least one aromatic hydrocarbon compound and at least one alkane or cycloalkane, and the first phase further comprises at least one extracted aromatic hydrocarbon compound and at least one extracted alkane or cycloalkane.

## Patentansprüche

1. Prozess zum Produzieren eines oder mehrerer Kohlenwasserstoffe aus Methanol, wobei der Prozess ein Inkontaktbringen einer Zusammensetzung, die Methanol, mindestens ein Alken und mindestens eine Organoschwefelverbindung umfasst, mit einem festen Säurekatalysator umfasst.

2. Prozess nach Anspruch 1, wobei die Zusammensetzung ferner mindestens eine aromatische Kohlenwasserstoffverbindung oder mindestens ein Alkan umfasst.

3. Prozess nach Anspruch 1, wobei die Zusammensetzung ferner mindestens eine aromatische Kohlenwasserstoffverbindung und mindestens ein Alkan oder Cycloalkan umfasst,
optional wobei die Zusammensetzung das mindestens eine Alken in einer Menge von 0,01 Gew.-% bis 20 Gew.-%, die mindestens eine Organoschwefelverbindung in einer Menge von 0,001 Gew.-% bis 1,0 Gew.-%, die mindestens eine aromatische Kohlenwasserstoffverbindung in einer Menge von 0,01 Gew.-% bis 15 Gew.-%, das mindestens eine Alkan oder Cycloalkan in einer Menge von 0,01 Gew.-% bis 15 Gew.-% und das Methanol in einer Menge von mindestens 49 Gew.-% umfasst.

4. Prozess nach einem der vorhergehenden Ansprüche, wobei die Zusammensetzung die mindestens eine Organoschwefelverbindung in einer Menge gleich oder größer als 0,001 Gew.-% (10 ppm) umfasst.

5. Prozess nach einem der vorhergehenden Ansprüche, wobei die Zusammensetzung ferner ein zweites polares, organisches Lösungsmittel umfasst, das sich von Methanol unterscheidet, optional wobei das zweite polare, organische Lösungsmittel ein Alkohol ist, der sich von Methanol unterscheidet, optional wobei der Alkohol, der sich von Methanol unterscheidet, ein mehrwertiger Alkohol, bevorzugt ein zweiwertiger Alkohol und bevorzugter Ethylenglykol ist.

6. Prozess nach einem der Ansprüche 1 bis 4, wobei die Zusammensetzung ferner mindestens eine aromatische Kohlenwasserstoffverbindung und mindestens ein Alkan oder Cycloalkan und ein zweites polares, organisches Lösungsmittel nach Anspruch 5 umfasst,
optional wobei die Zusammensetzung das mindestens eine Alken in einer Menge von 0,01 Gew.-% bis 16 Gew.-%, die mindestens eine Organoschwefelverbindung in einer Menge von 0,001 Gew.-% bis 1,0 Gew.-%, die mindestens eine aromatische Kohlenwasserstoffverbindung in einer Menge von 0,01 Gew.-% bis 8 Gew.-%, das mindestens eine Alkan oder Cycloalkan in einer Menge von 0,01 Gew.-% bis 10 Gew.-%, das Methanol in einer Menge von mindestens 50 Gew.-% und das zweite polare, organische Lösungsmittel in einer Menge von mindestens 15 Gew.-% umfasst.

7. Prozess nach einem der vorhergehenden Ansprüche, wobei der feste Säurekatalysator Folgendes umfasst:
(a) einen sauren Zeolithen, optional wobei der saure Zeolith H-ZSM-5, SAPO-34, H- Beta, H-Y, H-Mordenit oder SBA ist;
(b) ein saures Metalloxid oder ein saures Mischmetalloxid, optional wobei das saure Metalloxid oder das saure Mischmetalloxid Folgendes umfasst: ZnO, VOPO₄.2H₂O, ZrO₂/WO₃²⁻, ZrO₂/SO₄²⁻, Al₂O₃/PO₄³⁻, Al₂O₃/TiO₂/ZnO, Al₂O₃/ZrO₂/WO₃ oder TiO₂/SO₄²⁻; or
(c) eine feste Heteropolysäure, optional wobei die feste Heteropolysäure Folgendes umfasst: C_{Sx}Hₓ-3PW₁₂O₄₀, H₃PW₁₂O₄₀.6H₂O, H₃PW₁₂O₄₀/K-10-Ton, Ag_{0,5}H_{2,5}PW₁₂O₄₀, Zr_{0,7}H_{0,2}PW₁₂O₄₀ oder H₃PW₁₂O₄₀/ZrO₂,
optional wobei:
der feste Säurekatalysator einen sauren Aluminosilikat-Zeolithen oder einen sauren Silicium-Aluminiumphosphat(SAPO)-Zeolithen umfasst;
der feste Säurekatalysator einen sauren Aluminosilikat-Zeolithen mit der folgenden allgemeinen Formel (I) umfasst:
[Mⁿ⁺]_{x/n}[(AlO₂⁻)ₓ(SiO₂)_{y}] (I)
wobei M H⁺ ist oder M zwei oder mehr verschiedene Kationen ist, von denen eines H⁺ ist;
und das Si/Al-Verhältnis y/x von 1 bis 300 ist; oder
der feste Säurekatalysator H-ZSM-5 ist.

8. Prozess nach einem der vorhergehenden Ansprüche, wobei das Inkontaktbringen ein Inkontaktbringen der Zusammensetzung mit dem festen Säurekatalysator bei einer Temperatur von größer als 200 °C, optional bei einer Temperatur von größer als 320 °C oder bei einer Temperatur von 280 °C bis 650 °C und bevorzugt bei einer Temperatur von 325 °C bis 500 °C, bevorzugter bei einer Temperatur von 325 °C bis 450 °C umfasst.

9. Prozess nach einem der vorhergehenden Ansprüche, wobei das Inkontaktbringen Folgendes umfasst: Inkontaktbringen der Zusammensetzung mit dem festen Säurekatalysator bei einem Druck von gleich oder größer als 1 atm; und/oder gemeinsames Zuführen der Komponenten der Zusammensetzung über den festen Säurekatalysator, optional bei einer auf das Gewicht bezogenen stündlichen Raumgeschwindigkeit (Weight Hourly Space Velocity, WHSV) von gleich oder größer als 1 h⁻¹.

10. Prozess nach Anspruch 1, wobei:
der Prozess zum Produzieren eines oder mehrerer aromatischer Kohlenwasserstoffe aus dem Methanol ist;
die Zusammensetzung ferner mindestens ein Alkan und mindestens eine aromatische Kohlenwasserstoffverbindung umfasst;
der feste Säurekatalysator H-ZSM-5 umfasst; und
das Inkontaktbringen ein gemeinsames Zuführen der Komponenten in der Zusammensetzung über den festen Säurekatalysator bei einer auf das Gewicht bezogenen stündlichen Raumgeschwindigkeit von gleich oder größer als 1 h⁻¹, bei einer Temperatur von 325 °C bis 450 °C und bei einem Druck von gleich oder größer als 1 atm umfasst;
optional wobei die Zusammensetzung das mindestens eine Alken in einer Menge von 0,5 Gew.-% bis 20 Gew.-%, die mindestens eine Organoschwefelverbindung in einer Menge von 0,001 Gew.-% bis 1,0 Gew.-%, die mindestens eine aromatische Kohlenwasserstoffverbindung in einer Menge von 0,5 Gew.-% bis 15 Gew.-%, das mindestens eine Alkan in einer Menge von 0,5 Gew.-% bis 15 Gew.-% und das Methanol in einer Menge von mindestens 49 Gew.-% umfasst.

11. Prozess nach Anspruch 1, wobei:
der Prozess zum Produzieren eines oder mehrerer aromatischer Kohlenwasserstoffe aus dem Methanol ist;
die Zusammensetzung ferner mindestens ein Alkan, mindestens eine aromatische Kohlenwasserstoffverbindung und Ethylenglykol umfasst;
der feste Säurekatalysator H-ZSM-5 umfasst; und
das Inkontaktbringen ein gemeinsames Zuführen der Komponenten in der Zusammensetzung über den festen Säurekatalysator bei einer auf das Gewicht bezogenen stündlichen Raumgeschwindigkeit von gleich oder größer als 1 h⁻¹, bei einer Temperatur von 325 °C bis 450 °C und bei einem Druck von gleich oder größer als 1 atm umfasst;
optional wobei die Zusammensetzung das mindestens eine Alken in einer Menge von 0,5 Gew.-% bis 16 Gew.-%, die mindestens eine Organoschwefelverbindung in einer Menge von 0,001 Gew.-% bis 1,0 Gew.-%, die mindestens eine aromatische Kohlenwasserstoffverbindung in einer Menge von 0,5 Gew.-% bis 8 Gew.-%, das mindestens eine Alkan in einer Menge von 0,5 Gew.-% bis 10 Gew.-%, das Methanol in einer Menge von mindestens 50 Gew.-% und Ethylenglykol in einer Menge von mindestens 15 Gew.-% umfasst.

12. Prozess nach einem der vorhergehenden Ansprüche, wobei:
das mindestens eine Alken in der Zusammensetzung ein oder mehrere Alkene ausgewählt aus C₄₋₁₂ -Alkenen und C₅₋₈-Cycloalkenen umfasst, die mindestens eine Organoschwefelverbindung in der Zusammensetzung eine oder mehrere C₄₋₁₂-Organoschwefelverbindungen umfasst, die mindestens eine aromatische Kohlenwasserstoffverbindung in der Zusammensetzung, wenn vorhanden, ein oder mehrere aromatische C₆₋₁₂ -Kohlenwasserstoffe umfasst, das mindestens eine Alkan in der Zusammensetzung, wenn vorhanden, ein oder mehrere C₄₋₁₂-Alkane umfasst und das mindestens eine Cycloalkan in der Zusammensetzung, wenn vorhanden, ein oder mehrere C₅₋₈-Cycloalkane umfasst; oder
das mindestens eine Alken in der Zusammensetzung ein C₆-Alken oder ein C₆-Cycloalken beinhaltet, die mindestens eine aromatische Kohlenwasserstoffverbindung in der Zusammensetzung, wenn vorhanden, einen aromatischen C₈-Kohlenwasserstoff beinhaltet, das mindestens eine Alkan in der Zusammensetzung, wenn vorhanden, ein C₈-Alkan beinhaltet und wobei die mindestens eine Organoschwefelverbindung in der Zusammensetzung eine oder mehrere Verbindungen beinhaltet, die ausgewählt sind aus substituiertem oder unsubstituiertem Thiophen, substituiertem oder unsubstituiertem Benzothiophen und substituiertem oder unsubstituiertem Dibenzothiophen, optional wobei, wenn die Organoschwefelverbindung substituiert ist, sie mit von einem bis vier C₁₋₆-Alkylgruppen substituiert ist.

13. Prozess nach einem der vorhergehenden Ansprüche, wobei das mindestens eine Alken in der Zusammensetzung 1-Hexen beinhaltet, die mindestens eine aromatische Kohlenwasserstoffverbindung in der Zusammensetzung, wenn vorhanden, p-Xylol beinhaltet, das mindestens eine Alkan in der Zusammensetzung, wenn vorhanden, n-Octan beinhaltet und die mindestens eine Organoschwefelverbindung in der Zusammensetzung Thiophen beinhaltet.

14. Prozess nach einem der vorhergehenden Ansprüche, der ferner Hydroentschwefelung der mindestens einen Organoschwefelverbindung umfasst, optional wobei die Hydroentschwefelung der mindestens einen Organoschwefelverbindung H₂S und ein oder mehrere Kohlenwasserstoffe produziert.

15. Prozess nach einem der vorhergehenden Ansprüche, der ferner ein Erhalten der Zusammensetzung durch einen Extraktionsprozess umfasst, der Folgendes umfasst:
(a) Inkontaktbringen von Benzin, das durch einen Fluid-Catalytic-Cracking-Prozess erhältlich ist, wobei das Benzin mindestens ein Alken und mindestens eine Organoschwefelverbindung umfasst, mit einem Extraktionslösungsmittel, das zum Extrahieren von Alkenen und Organoschwefelverbindungen geeignet ist, wobei das Extraktionslösungsmittel das Methanol und optional ein zweites polares, organisches Lösungsmittel, das sich von Methanol unterscheidet, umfasst, und dadurch Bilden von Folgendem:
(i) einer ersten Phase, umfassend das Extraktionslösungsmittel, das das Methanol, mindestens ein extrahiertes Alken und mindestens eine extrahierte Organoschwefelverbindung umfasst, und
(ii) einer zweiten Phase, umfassend Benzin mit einem reduzierten Alkengehalt und einem reduzierten Organoschwefelgehalt verglichen mit Benzin, das durch einen Fluid-Catalytic-Cracking-Prozess erhältlich ist,
und
(b) Rückgewinnen mindestens eines Teils der ersten Phase zur Verwendung als die Zusammensetzung;
optional wobei: das Benzin, das durch einen Fluid-Catalytic-Cracking-Prozess erhältlich ist, ferner mindestens eine aromatische Kohlenwasserstoffverbindung mindestens ein Alkan oder Cycloalkan umfasst und die erste Phase ferner mindestens eine extrahierte aromatische Kohlenwasserstoffverbindung mindestens ein extrahiertes Alkan oder Cycloalkan umfasst.

## Revendications

1. Processus de production d'au moins un hydrocarbure à partir de méthanol, lequel processus comprend la mise en contact d'une composition qui comprend le méthanol, au moins un alcène et au moins un composé organosoufré, avec un catalyseur acide solide.

2. Processus selon la revendication 1 dans lequel la composition comprend en outre au moins un composé hydrocarbure aromatique ou au moins un alcane.

3. Processus selon la revendication 1 dans lequel la composition comprend en outre au moins un composé hydrocarbure aromatique et au moins un alcane ou un cycloalcane,
éventuellement dans lequel la composition comprend l'au moins un alcène dans une quantité allant de 0,01 % en poids à 20 % en poids, l'au moins un composé organosoufré dans une quantité allant de 0,001 % en poids à 1,0 % en poids, l'au moins un composé hydrocarbure aromatique dans une quantité allant de 0,01 % en poids à 15 % en poids, l'au moins un alcane ou cycloalcane dans une quantité allant de 0,01 % en poids à 15 % en poids, et le méthanol dans une quantité d'au moins 49 % en poids.

4. Processus selon l'une quelconque des revendications précédentes, dans lequel la composition comprend l'au moins un composé organosoufré dans une quantité égale ou supérieure à 0,001 % (10 ppm) en poids.

5. Processus selon l'une quelconque des revendications précédentes dans lequel la composition comprend en outre un deuxième solvant organique polaire qui est autre que le méthanol, éventuellement dans lequel le deuxième solvant organique polaire est un alcool autre que le méthanol, éventuellement dans lequel l'alcool autre que le méthanol est un alcool polyhdrique, de préférence un alcool dihydrique et de manière davantage préférée l'éthylène glycol.

6. Processus selon l'une quelconque des revendications 1 à 4, dans lequel la composition comprend en outre au moins un composé hydrocarbure aromatique et au moins un alcane ou cycloalcane, et un deuxième solvant organique polaire tel que défini dans la revendication 5,
éventuellement dans lequel la composition comprend l'au moins un alcène dans une quantité allant de 0,01 % en poids à 16 % en poids, l'au moins un composé organosoufré dans une quantité allant de 0,001 % en poids à 1,0 % en poids, l'au moins un composé hydrocarbure aromatique dans une quantité allant de 0,01 % en poids à 8 % en poids, l'au moins un alcane ou cycloalcane dans une quantité allant de 0,01 % en poids à 10 % en poids, le méthanol dans une quantité d'au moins 50 % en poids et le deuxième solvant organique polaire dans une quantité d'au moins 15 % en poids.

7. Processus selon l'une quelconque des revendications précédentes dans lequel le catalyseur acide solide comprend :
(a) une zéolite acide, la zéolite acide étant éventuellement H-ZSM-5, SAPO-34, H- bêta, H-Y, H-mordénite ou SBA ;
(b) un oxyde métallique acide ou un oxyde métallique mixte acide, l'oxyde métallique acide ou l'oxyde métallique mixte acide comprenant : ZnO, VOPO₄.2H₂O, ZrO₂/WO₃²⁻, ZrO₂/SO₄²⁻, Al₂O₃/PO₄³⁻, Al₂O₃/TiO₂/ZnO, Al₂O₃/ZrO₂/WO₃, ou TiO₂/SO₄²⁻ ; ou
(c) un hétéropolyacide solide, l'hétéropolyacide solide comprenant éventuellement : C_{Sx}Hₓ-3PW₁₂O₄₀, H₃PW₁₂O₄₀.6H₂O, argile H₃PW₁₂O₄₀/K-10, Ag_{0.5}H_{2.5}PW₁₂O₄₀, Zr_{0.7}H_{0.2}PW₁₂O₄₀ ou H₃PW₁₂O₄₀/ZrO₂ ;
le catalyseur acide solide comprenant éventuellement une zéolite d'aluminosilicate acide ou une zéolite de phosphate d'aluminium et de silicium acide (SAPO) ;
le catalyseur acide solide comprenant éventuellement une zéolite d'aluminosilicate acide présentant la formule générale (I) :
[Mⁿ⁺]_{x/n}[(AlO₂⁻)ₓ(SiO₂)_{y}] (I)
où M représente H⁺ ou M représente au moins deux cations différents, un desquels est H⁺ ;
et le rapport y/x de Si/Al est de 1 sur 300 ; ou
le catalyseur acide solide est H-ZSM-5.

8. Processus selon l'une quelconque des revendications précédentes, dans lequel ladite mise en contact comprend la mise en contact de la composition avec le catalyseur acide solide à une température supérieure à 200 °C, éventuellement à une température supérieure à 320 °C ou à une température allant de 280 °C à 650 °C, et de préférence à une température allant de 325 °C à 500 °C, de manière davantage préférée à une température allant de 325 °C à 450 °C.

9. Processus selon l'une quelconque des revendications précédentes, dans lequel ladite mise en contact comprend : la mise en contact de la composition avec le catalyseur acide solide à une pression égale ou supérieure à 1 atm ; et/ou une introduction simultanée des composants de ladite composition au-dessus du catalyseur acide solide, éventuellement à une vitesse spatiale horaire pondérale égale ou supérieure à 1 hr⁻¹.

10. Procédé selon la revendication 1 dans lequel :
le processus est destiné à produire au moins un hydrocarbure aromatique à partir dudit méthanol ;
la composition comprend en outre au moins un alcane et au moins un composé hydrocarbure aromatique ;
le catalyseur acide solide comprend H-ZSM-5 ; et
ladite mise en contact comprend l'introduction simultanée des composants dans la composition au-dessus du catalyseur acide solide à une vitesse spatiale horaire pondérale égale ou supérieure à 1 hr⁻¹, à une température allant de 325 °C à 450 °C et à une pression égale ou supérieure à 1 atm ;
la composition comprenant éventuellement l'au moins un alcène dans une quantité allant de 0,5 % en poids à 20 % en poids, l'au moins un composé organosoufré dans une quantité allant de 0,001 % en poids à 1,0 % en poids, l'au moins un composé hydrocarbure aromatique dans une quantité allant de 0,5 % en poids à 15 % en poids, l'au moins un alcane dans une quantité allant de 0,5 % en poids à 15 % en poids et le méthanol dans une quantité d'au moins 49 % en poids.

11. Processus selon la revendication 1 dans lequel :
le processus est destiné à produire au moins un hydrocarbure aromatique à partir dudit méthanol ;
la composition comprend en outre au moins un alcane, au moins un composé hydrocarbure aromatique et l'éthylène glycol ;
le catalyseur acide solide comprend H-ZSM-5 ; et
ladite mise en contact comprend l'introduction simultanée des composants dans la composition au-dessus du catalyseur acide solide à une vitesse spatiale horaire pondérale égale ou supérieure à 1 hr⁻¹, à une température allant de 325 °C à 450 °C et à une pression égale ou supérieure à 1 atm ;
la composition comprenant éventuellement l'au moins un alcène dans une quantité allant de 0,5 % en poids à 16 % en poids, l'au moins un composé organosoufré dans une quantité allant de 0,001 % en poids à 1,0 % en poids, l'au moins un composé hydrocarbure aromatique dans une quantité allant de 0,5 % en poids à 8 % en poids, l'au moins un alcane dans une quantité allant de 0,5 % en poids à 10 % en poids, le méthanol dans une quantité d'au moins 50 % en poids et l'éthylène glycol dans une quantité d'au moins 15 % en poids.

12. Processus selon l'une quelconque des revendications précédentes dans lequel
l'au moins un alcène dans la composition comprend au moins un alcène choisi parmi les alcènes en C₄₋₁₂ et les cycloalcènes en C₅₋₈, l'au moins un composé organosoufré dans la composition comprend au moins un composé organosoufré en C₄₋₁₂, l'au moins un composé hydrocarbure aromatique dans la composition, lorsque présent, comprend au moins un hydrocarbure aromatique en C₆₋₁₂, l'au moins un alcane dans la composition, lorsque présent, comprend au moins un alcane en C₄₋₁₂ et l'au moins un cycloalcane dans la composition, lorsque présent, comprend au moins un cycloalcane en C₅₋₈ ; ou
l'au moins un alcène dans la composition comprend un alcène en C₆ ou un cycloalcène en C₆, l'au moins un composé hydrocarbure aromatique dans la composition, lorsque présent, comprend un hydrocarbure aromatique en C₈, l'au moins un alcane dans la composition, lorsque présent, comprend un alcane en C₈, et dans lequel l'au moins un composé organosoufré dans la composition comprend au moins un composé choisi parmi le thiophène substitué ou non substitué, le benzothiophène substitué ou non substitué et le dibenzothiophène substitué ou non substitué, dans lequel éventuellement lorsque le composé organosoufré est substitué, il est substitué par un à quatre groupes alkyle en C₁₋₆.

13. Processus selon l'une quelconque des revendications précédentes dans lequel l'au moins un alcène dans la composition comprend 1-hexène, l'au moins un composé hydrocarbure aromatique dans la composition, lorsque présent, comprend le p-xylène, l'au moins un alcane dans la composition, lorsque présent, comprend le n-octane, et l'au moins un composé organosoufré dans la composition comprend le thiophène.

14. Processus selon l'une quelconque des revendications précédentes comprenant en outre une hydrodésulfuration de l'au moins un composé organosoufré, éventuellement dans lequel ladite hydrodésulfuration de l'au moins un composé organosoufré produit H₂S et au moins un autre hydrocarbure.

15. Processus selon l'une quelconque des revendications précédentes qui comprend en outre l'obtention de la composition par un processus d'extraction comprenant
(a) la mise en contact de carburant pouvant être obtenu par un processus de craquage catalytique, lequel carburant comprend au moins un alcène et au moins un composé organosoufré, avec un solvant d'extraction conçu pour extraire des alcènes et des composés organosoufrés, lequel solvant d'extraction comprend ledit méthanol et éventuellement un deuxième solvant organique polaire autre que le méthanol, et permettant ainsi de former :
(i) une première phase comprenant ledit solvant d'extraction qui comprend ledit méthanol, au moins un alcène extrait, et au moins un composé organosoufré extrait, et
(ii) une deuxième phase comprenant le carburant présentant une teneur en alcène réduite et une teneur en organosoufre réduite par rapport audit carburant pouvant être obtenu par un processus de craquage catalytique fluide,
et
(b) la récupération d'au moins une partie de la première phase destinée à une utilisation en tant que composition ;
le carburant pouvant éventuellement être obtenu par un processus de craquage catalytique fluide comprenant en outre au moins un composé hydrocarbure aromatique et au moins un alcane ou cycloalcane, et la première phase comprenant éventuellement en outre au moins un composé hydrocarbure aromatique extrait et au moins un alcane ou cycloalcane extrait.
